# EUROPEAN PATENT APPLICATION

(11) **EP 4 751 853 A1**
(43) Date of publication of application: **03.06.2026**
(21) Application number: 25153723.9
(22) Date of filing: 24.01.2025
(51) Int. Cl.: B25F 5/00

(54) **POWER TOOL, POWER TOOL SYSTEM, AND CIRCULAR SAW**

(30) Priority: 28.11.2024 CN 202411729973
(71) Applicant: Nanjing Chervon Industry Co., Ltd., Nanjing, Jiangsu 211106 (CN)
(72) Inventor: LI, Tengyue, Nanjing (CN); LIU, Haoyue, Nanjing (CN); QIU, Xuefeng, Nanjing (CN); DING, Jieqiong, Nanjing (CN)
(74) Representative: Sun, Yiming

(57) **Abstract**

Provided is a power tool including an electric motor including multi-phase windings; a driver circuit electrically connected to the electric motor; a controller electrically connected to the driver circuit and configured to output control signals to the driver circuit; a detection assembly communicatively connected to the controller and configured to detect a working state of the power tool; and a battery pack interface configured to be electrically connected to a battery pack. The battery pack interface includes a terminal assembly, which includes electrode terminals and a signal terminal. The controller is configured to acquire a real-time state parameter of the battery pack through the signal terminal or the detection assembly; acquire a load parameter of the electric motor through the detection assembly; and determine a conduction band and/or an advanced angle of the multi-phase windings according to the real-time state parameter and the load parameter.

## Description

### RELATED APPLICATION INFORMATION

This application claims the benefit of Chinese Patent Application No. CN 202411729973.9, filed on Nov. 28, 2024, which is incorporated by reference in their entirety herein.

### TECHNICAL FIELD

The present application relates to mechanized tools and, in particular, to a power tool, a power tool system, and a circular saw.

### BACKGROUND

A power tool system in the related art includes a power tool and an adapted battery pack. During use, the battery pack is connected to the power tool, and the battery pack is used for powering the power tool.

When in use, the power tool in the related art exits extended conduction at a fixed threshold according to a load. Therefore, when the power tool in the related art is adapted to battery packs of different types and battery packs in different states, the performance of the battery pack cannot be fully utilized.

This part provides background information related to the present application, and the background information is not necessarily the existing art.

### SUMMARY

An object of the present application is to solve or at least alleviate part or all of the preceding problems. Therefore, an object of the present application is to provide a power tool, a power tool system, and a circular saw, which can more fully utilize the performance of a battery pack.

To achieve the preceding object, the present application adopts the technical solutions below.

A power tool includes an electric motor including multi-phase windings; a driver circuit electrically connected to the electric motor and configured to switch an energized state of the multi-phase windings; a controller electrically connected to the driver circuit and configured to output control signals to the driver circuit; a detection assembly communicatively connected to the controller and configured to detect a working state of the power tool; and a battery pack interface configured to be electrically connected to a battery pack and including a terminal assembly, where the terminal assembly includes electrode terminals electrically connected to the driver circuit and a signal terminal communicatively connected to the controller.

The controller is configured to acquire a real-time state parameter of the battery pack through the signal terminal or the detection assembly; acquire a load parameter of the electric motor through the detection assembly; and determine a conduction band and/or an advanced angle of the multi-phase windings according to the real-time state parameter and the load parameter.

In some examples, the real-time state parameter includes at least one of a battery pack temperature, a battery pack voltage, a battery pack state of charge, and a battery pack state of power.

In some examples, the controller is configured to, if the battery pack state of power is a first state of power, reduce the conduction band when the load parameter reaches a first threshold; and if the battery pack state of power is a second state of power, reduce the conduction band when the load parameter reaches a second threshold.

The first state of power is greater than the second state of power, and the first threshold is greater than the second threshold.

In some examples, the controller is configured to, if the battery pack temperature is a first temperature, reduce the conduction band when the load parameter reaches a third threshold; and if the battery pack temperature is a second temperature, reduce the conduction band when the load parameter reaches a fourth threshold.

The first temperature is higher than the second temperature, and the third threshold is less than the fourth threshold.

In some examples, the controller is configured to, if the battery pack voltage is a first voltage, reduce the conduction band when the load parameter reaches a fifth threshold; and if the battery pack voltage is a second voltage, reduce the conduction band when the load parameter reaches a sixth threshold.

The first voltage is higher than the second voltage, and the fifth threshold is greater than the sixth threshold.

In some examples, the controller is configured to, if the battery pack state of charge is a first state of charge, reduce the conduction band when the load parameter reaches a seventh threshold; and if the battery pack state of charge is a second state of charge, reduce the conduction band when the load parameter reaches an eighth threshold.

The first state of charge is greater than the second state of charge, and the seventh threshold is greater than the eighth threshold.

In some examples, the real-time state parameter is directly sent by the battery pack to the controller through the signal terminal.

In some examples, the controller calculates the real-time state parameter according to a signal received through the signal terminal.

In some examples, the detection assembly includes a voltage detection member configured to detect the battery pack voltage.

In some examples, the controller is configured to reduce the conduction band when a commutation interval is greater than a preset interval threshold or a difference between the commutation interval and a locked-rotor protection time is less than a preset difference threshold.

In some examples, a control board is further included, where the driver circuit is disposed on the control board.

The controller is further configured to, when a temperature of the control board is higher than a preset control board temperature threshold, a temperature of the electric motor is higher than a preset motor temperature threshold, or a continuous working duration of the power tool under a preset load parameter is greater than a preset duration threshold, reduce the conduction band or reduce a load parameter threshold of the load parameter, and reduce the conduction band when the load parameter reaches the load parameter threshold.

In some examples, the detection assembly includes a temperature detection member configured to detect the temperature of the electric motor.

In some examples, the detection assembly includes a current detection member, and the controller is configured to determine the temperature of the electric motor according to a time integral of a current of the electric motor greater than a preset current threshold.

In some examples, multiple battery pack interfaces are provided, and each of the multiple battery pack interfaces is electrically connectable to one battery pack.

The controller is configured to acquire, through the signal terminal or the detection assembly, real-time state information of multiple battery packs connected to the multiple battery pack interfaces and determine the conduction band and/or the advanced angle of the multi-phase windings according to a real-time state parameter of a battery pack with a weakest discharge capability and the load parameter.

In some examples, the power tool is a circular saw.

A power tool system includes a power tool, a first battery pack, and a second battery pack.

The power tool includes an electric motor including multi-phase windings; a driver circuit electrically connected to the electric motor and configured to switch an energized state of the multi-phase windings; a controller electrically connected to the driver circuit and configured to output control signals to the driver circuit; a detection assembly communicatively connected to the controller and configured to detect a working state of the power tool; and a battery pack interface including a terminal assembly, where the terminal assembly includes electrode terminals electrically connected to the driver circuit and a signal terminal communicatively connected to the controller.

The first battery pack includes a housing; multiple cells accommodated in the housing; and a power tool interface disposed on the housing and configured to be electrically connected to the battery pack interface.

The second battery pack includes a housing; multiple cells accommodated in the housing; and a power tool interface disposed on the housing and configured to be electrically connected to the battery pack interface.

The controller is configured to acquire, through the signal terminal, preset information of a battery pack connected to the battery pack interface; acquire a load parameter of the electric motor through the detection assembly; determine, according to the preset information, the battery pack connected to the battery pack interface; if the first battery pack is electrically connected to the battery pack interface, reduce a conduction band of the multi-phase windings when the load parameter reaches a ninth threshold; and if the second battery pack is electrically connected to the battery pack interface, reduce the conduction band when the load parameter reaches a tenth threshold, where the ninth threshold is different from the tenth threshold.

In some examples, the preset information includes at least one of the number of parallel cells and an internal resistance.

In some examples, when the number of parallel cells of the first battery pack is less than the number of parallel cells of the second battery pack, the ninth threshold is less than the tenth threshold.

In some examples, when an internal resistance of the first battery pack is greater than an internal resistance of the second battery pack, the ninth threshold is less than the tenth threshold.

In some examples, the controller is configured to set the conduction band to a first value if the first battery pack is electrically connected to the battery pack interface; and set the conduction band to a second value if the second battery pack is electrically connected to the battery pack interface, where the first value is different from the second value.

In some examples, the controller is configured to reduce the conduction band when a commutation interval is greater than a preset interval threshold or a difference between the commutation interval and a locked-rotor protection time is less than a preset difference threshold.

In some examples, a control board is further included, where the driver circuit is disposed on the control board.

The controller is further configured to, when a temperature of the control board is higher than a preset control board temperature threshold, a temperature of the electric motor is higher than a preset motor temperature threshold, or a continuous working duration of the power tool under a preset load parameter is greater than a preset duration threshold, reduce the conduction band or reduce a load parameter threshold of the load parameter, and reduce the conduction band when the load parameter reaches the load parameter threshold.

In some examples, the first battery pack and the second battery pack have the same rated voltage.

In some examples, the power tool is a circular saw.

In some examples, multiple battery pack interfaces are provided, and each of the multiple battery pack interfaces is electrically connectable to one battery pack.

The controller is configured to acquire, through the signal terminal or the detection assembly, battery pack data of each of multiple battery packs connected to the multiple battery pack interfaces, where the battery pack data includes at least one of a real-time state parameter and the preset information; identify a battery pack with a weakest discharge capability according to the battery pack data of each of the multiple battery packs; and determine the conduction band and/or an advanced angle of the multi-phase windings according to battery pack data of the battery pack with the weakest discharge capability and the load parameter.

A circular saw includes a saw blade; an electric motor including multi-phase windings and an output shaft, where the output shaft drives the saw blade to rotate; a driver circuit electrically connected to the electric motor and configured to switch an energized state of the multi-phase windings; a controller electrically connected to the driver circuit and configured to output control signals to the driver circuit; a detection assembly communicatively connected to the controller and configured to detect a working state of the circular saw; and a battery pack interface configured to be electrically connected to a battery pack and including a terminal assembly, where the terminal assembly includes electrode terminals electrically connected to the driver circuit and a signal terminal communicatively connected to the controller.

The controller is configured to acquire, through the signal terminal or the detection assembly, battery pack data, where the battery pack data includes at least one of preset information and a real-time state parameter; acquire a load parameter of the electric motor through the detection assembly; and determine a conduction band and/or an advanced angle of the multi-phase windings according to the battery pack data and the load parameter.

In some examples, the preset information includes at least one of the number of parallel cells and an internal resistance.

The preset information is sent by the battery pack to the controller through the signal terminal.

In some examples, the controller is configured to, if the number of parallel cells is a first number, reduce the conduction band when the load parameter reaches an eleventh threshold; and if the number of parallel cells is a second number, reduce the conduction band when the load parameter reaches a twelfth threshold.

The first number is less than the second number, and the eleventh threshold is less than the twelfth threshold.

In some examples, the controller is configured to, if the internal resistance of the battery pack is a first internal resistance, reduce the conduction band when the load parameter reaches a thirteenth threshold; and if the internal resistance of the battery pack is a second internal resistance, reduce the conduction band when the load parameter reaches a fourteenth threshold.

The first internal resistance is greater than the second internal resistance, and the thirteenth threshold is less than the fourteenth threshold.

In some examples, the real-time state parameter is directly sent by the battery pack to the controller through the signal terminal.

In some examples, the controller calculates the real-time state parameter according to the battery pack data received through the signal terminal.

The real-time state parameter includes at least one of a battery pack temperature, a battery pack voltage, a battery pack state of charge, and a battery pack state of power.

In some examples, the detection assembly includes a voltage detection member configured to detect the battery pack voltage.

In some examples, the controller is configured to reduce the conduction band when a commutation interval is greater than a preset interval threshold or a difference between the commutation interval and a locked-rotor protection time is less than a preset difference threshold.

In some examples, a control board is further included, where the driver circuit is disposed on the control board.

The controller is further configured to, when a temperature of the control board is higher than a preset control board temperature threshold, a temperature of the electric motor is higher than a preset motor temperature threshold, or a continuous working duration of the circular saw under a preset load parameter is greater than a preset duration threshold, reduce the conduction band or reduce a load parameter threshold of the load parameter, and reduce the conduction band when the load parameter reaches the load parameter threshold.

In some examples, the detection assembly includes a temperature detection member configured to detect the temperature of the electric motor.

In some examples, the detection assembly includes a current detection member, and the controller is configured to determine the temperature of the electric motor according to a time integral of a current of the electric motor greater than a preset current threshold.

In some examples, multiple battery pack interfaces are provided, and each of the multiple battery pack interfaces is electrically connectable to one battery pack.

The controller is configured to acquire, through the signal terminal or the detection assembly, battery pack data of multiple battery packs connected to the multiple battery pack interfaces and determine the conduction band and/or the advanced angle of the multi-phase windings according to battery pack data of a battery pack with a weakest discharge capability and the load parameter.

A power tool includes an electric motor including multi-phase windings; a driver circuit electrically connected to the electric motor and configured to switch an energized state of the multi-phase windings; a controller electrically connected to the driver circuit and configured to output control signals to the driver circuit; a detection assembly communicatively connected to the controller and configured to detect a working state of the power tool; and multiple battery pack interfaces, where each of the multiple battery pack interfaces is electrically connectable to one battery pack and includes a terminal assembly, and the terminal assembly includes electrode terminals electrically connected to the driver circuit and a signal terminal communicatively connected to the controller.

The controller is configured to acquire, through the signal terminal or the detection assembly, battery pack data of each of multiple battery packs connected to the multiple battery pack interfaces, where the battery pack data includes at least one of preset information and a real-time state parameter; identify a battery pack with a weakest discharge capability according to the battery pack data of each of the multiple battery packs; acquire a load parameter of the electric motor through the detection assembly; and determine a conduction band and/or an advanced angle of the multi-phase windings according to battery pack data of the battery pack with the weakest discharge capability and the load parameter.

In some examples, the preset information includes at least one of the number of parallel cells and an internal resistance.

The preset information is directly sent by the battery pack to the controller through the signal terminal.

In some examples, the controller is configured to determine a battery pack with a smallest number of parallel cells as the battery pack with the weakest discharge capability.

In some examples, the controller is configured to determine a battery pack with a largest internal resistance as the battery pack with the weakest discharge capability.

In some examples, the real-time state parameter includes one or more of a battery pack temperature, a battery pack voltage, a battery pack state of charge, and a battery pack state of power.

In some examples, the controller is configured to determine a battery pack with a smallest battery pack state of power as the battery pack with the weakest discharge capability.

In some examples, the controller is configured to determine a battery pack with a highest battery pack temperature as the battery pack with the weakest discharge capability.

In some examples, the controller is configured to determine a battery pack with a lowest battery pack voltage as the battery pack with the weakest discharge capability.

In some examples, the controller is configured to determine a battery pack with a smallest battery pack state of charge as the battery pack with the weakest discharge capability.

In some examples, the controller is configured to calculate the load parameter according to at least one of a current of the electric motor, a rotational speed of the electric motor, and a temperature of the electric motor.

The present application has the following benefit: the controller is configured to determine the conduction band and/or the advanced angle of the multi-phase windings according to the real-time state parameter and the load parameter. The real-time state parameter refers to a series of data for describing a current working state and performance of the battery pack. Therefore, the conduction band and/or the advanced angle of the multi-phase windings are determined according to the real-time state parameter and the load parameter so that the conduction band and/or the advanced angle of the multi-phase windings can be different according to a different battery pack adapted, that is, different extension performance can be utilized according to different battery packs and the performance of the battery pack can be more fully utilized.

It is to be understood that the content described in this part is neither intended to identify key or important features of examples of the present application nor intended to limit the scope of the present application. Other features of the present application become apparent from the description provided hereinafter.

### BRIEF DESCRIPTION OF DRAWINGS

To illustrate technical solutions in examples of the present application more clearly, the drawings used in the description of the examples are briefly described below. Apparently, the drawings described below illustrate only part of examples of the present application, and those of ordinary skill in the art may obtain other drawings based on the drawings described below on the premise that no creative work is done.
FIG. 1 is a structural view of a power tool according to an example of the present application;
FIG. 2 is a structural view of the power tool of FIG. 1 from another angle;
FIG. 3 is a structural view of a battery pack according to an example of the present application;
FIG. 4 is a circuit schematic of a power tool system according to an example of the present application;
FIG. 5 is a circuit schematic of a power tool system according to another example of the present application;
FIG. 6 is a graph showing a correlation relationship between a battery pack state of power and a load parameter threshold;
FIG. 7 is a graph showing a correlation relationship between a battery pack temperature and a load parameter threshold;
FIG. 8 is a graph showing a correlation relationship between a battery pack voltage and a load parameter threshold;
FIG. 9 is a graph showing a correlation relationship between a battery pack state of charge and a load parameter threshold;
FIG. 10 is a graph showing relationships between a load parameter and a conduction band of a first battery pack and a second battery pack with different numbers of parallel cells;
FIG. 11 is a graph showing relationships between a load parameter and a conduction band of a first battery pack and a second battery pack with different internal resistances;
FIG. 12 is a control flowchart of a power tool according to an example of the present application;
FIG. 13 is a control flowchart of a power tool according to another example of the present application;
FIG. 14 is a control flowchart of a power tool according to another example of the present application;
FIG. 15 is a control flowchart of a power tool according to another example of the present application;
FIG. 16 is a control flowchart of a power tool according to another example of the present application;
FIG. 17 is a control flowchart of a power tool according to another example of the present application;
FIG. 18 is a control flowchart of a power tool according to another example of the present application;
FIG. 19 is a control flowchart of a power tool system according to an example of the present application;
FIG. 20 is a control flowchart of a power tool system according to another example of the present application;
FIG. 21 is a control flowchart of a power tool system according to another example of the present application;
FIG. 22 is a control flowchart of a power tool system according to another example of the present application;
FIG. 23 is a control flowchart of a circular saw according to an example of the present application;
FIG. 24 is a control flowchart of a circular saw according to another example of the present application;
FIG. 25 is a control flowchart of a circular saw according to another example of the present application;
FIG. 26 is a control flowchart of a circular saw according to another example of the present application;
FIG. 27 is a control flowchart of a circular saw according to another example of the present application;
FIG. 28 is a control flowchart of a power tool according to an example of the present application;
FIG. 29 is a control flowchart of a power tool according to another example of the present application;
FIG. 30 is a control flowchart of a power tool according to another example of the present application;
FIG. 31 is a control flowchart of a power tool according to another example of the present application;
FIG. 32 is a control flowchart of a power tool according to another example of the present application;
FIG. 33 is a control flowchart of a power tool according to another example of the present application;
FIG. 34 is a control flowchart of a power tool according to another example of the present application; and
FIG. 35 is a control flowchart of a power tool according to another example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

The present application is described below in detail in conjunction with drawings and examples.

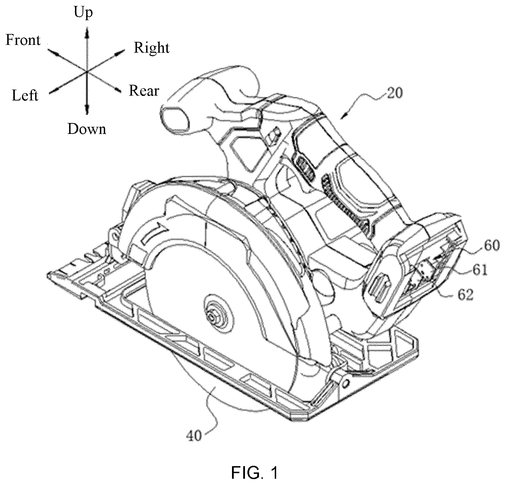

To clearly illustrate the technical solutions of the present application, an upper side, a lower side, a front side, and a rear side are defined, as shown in FIG. 1.

Examples of the present application show a power tool system. As shown in FIGS. 1 to 3, the power tool system includes a power tool 20 and a direct current power supply 30. The direct current power supply 30 is detachably connected to the power tool 20 to supply power to the power tool 20. The direct current power supply 30 is a battery pack 30. In the subsequent description, the battery pack 30 is used instead of the direct current power supply 30, which cannot be construed as limiting the present application.

The power tool 20 may be a vegetation care tool, for example, a string trimmer, a mower, a hedge trimmer, or a chainsaw. Alternatively, the power tool 20 may be a cleaning tool, for example, a blower, a snow thrower, or a washer. Alternatively, the power tool 20 may be a drilling tool, for example, a drill, a screwdriver, a wrench, or an electric hammer. Alternatively, the power tool 20 may be a sawing tool, for example, a reciprocating saw, a jigsaw, or a circular saw. Alternatively, the power tool 20 may be a table tool, for example, a table saw, a miter saw, a metal cutter, or a router. Alternatively, the power tool 20 may be a grinding tool, for example, an angle grinder or a sander. In this example, the power tool 20 is specifically the circular saw. The technical solutions of the present application are described below by using the circular saw as an example, which cannot be construed as limiting the present application.

In some examples, the battery pack 30 includes, but is not limited to, a lithium iron phosphate battery pack, a lithium battery pack, and a full-tab battery pack. In some examples, the rated voltage or nominal voltage of the battery pack 30 ranges from 24 V to 60 V. For example, the rated voltage or nominal voltage of the battery pack 30 may be 36 V, 40 V, 48 V, or 56 V.

As shown in FIGS. 1 to 3, the power tool 20 includes a target work mechanism that requires electrical energy. The battery pack 30 mates with a corresponding control mechanism to supply power to the target work mechanism. In this example, the target work mechanism includes an electric motor 12. In some examples, the electric motor 12 is specifically a brushless motor 12. For the circular saw, the power tool 20 further includes a cutting member for cutting a target object. Specifically, the cutting member is a saw blade 40. The electric motor 12 further includes an output shaft that drives the saw blade 40 to rotate to cut the target object.

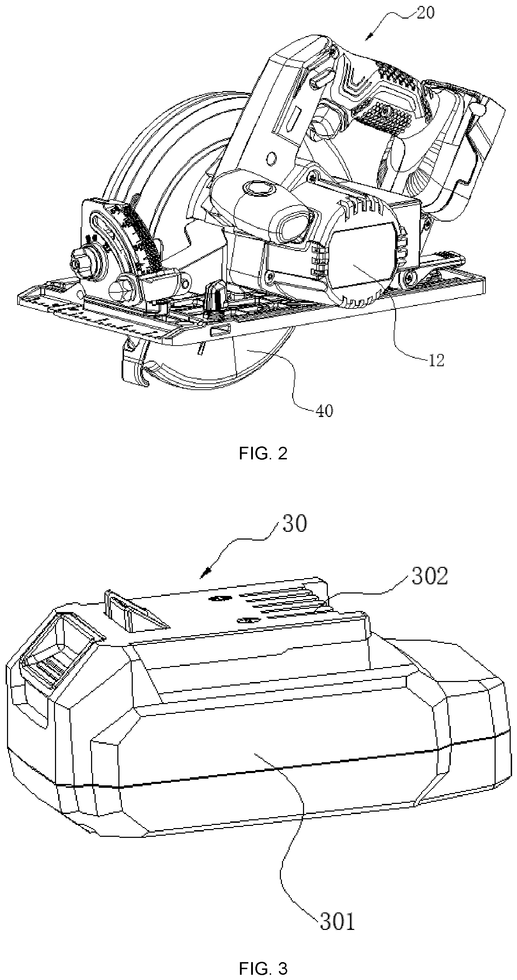

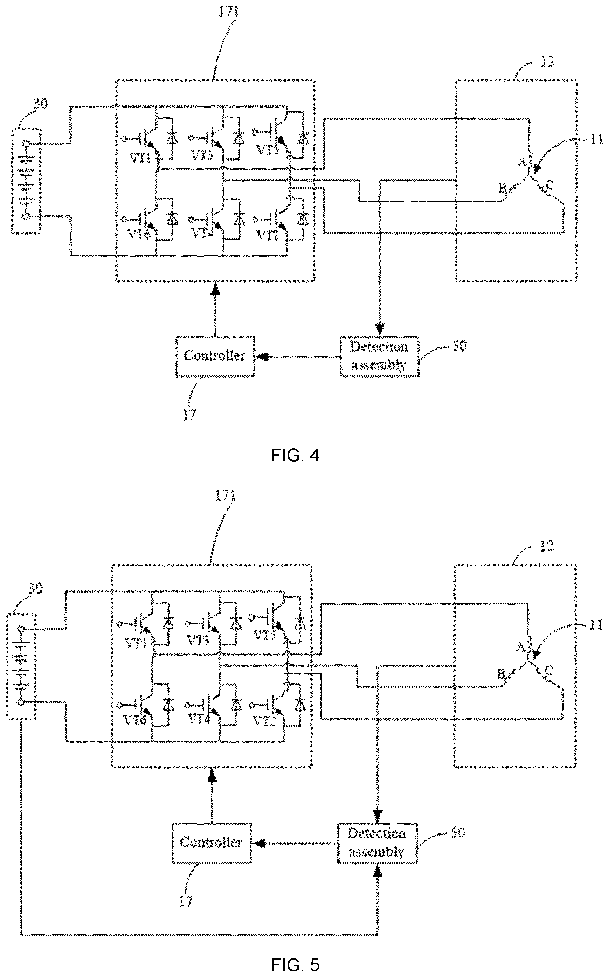

In some examples, as shown in FIGS. 2 and 4, the electric motor 12 includes stator windings and a rotor. In some examples, the stator windings include multi-phase windings, and the multi-phase windings refer to windings with two or more phases. In some examples, the electric motor 12 includes the brushless motor. In some examples, the brushless motor 12 is a three-phase brushless motor. In this case, the multi-phase windings are specifically three-phase windings 11 that include three phases A, B, and C and that are commutated electronically. In some examples, the three phases A, B, and C adopt a star connection. In some other examples, the three phases A, B, and C adopt a delta connection. In this example, the three phases A, B, and C adopt the star connection as an example, which cannot be construed as limiting the present application. However, it is to be understood that other types of brushless motors are within the scope of the present disclosure. The brushless motor may include less than or more than three phases.

The control mechanism includes a driver circuit 171 and a controller 17, where the driver circuit 171 is electrically connected between the battery pack 30 and the electric motor 12 to drive the electric motor 12. The controller 17 is electrically connected to at least the driver circuit 171 and configured to output control signals to the driver circuit 171 to control the operation of the electric motor 12. The driver circuit 171 is configured to switch an energized state of the multi-phase windings to drive the electric motor 12. In some examples, the driver circuit 171 includes multiple switches electrically connected between the battery pack 30 and the electric motor 12, and the driver circuit 171 may turn on different switches so that different windings among the multi-phase windings are conducted. In some examples, the three phases A, B, and C adopt the star connection, and the driver circuit 171 is further configured to separately make each group of two phases of windings of the electric motor 12 conducted, where the two phases of windings include windings AB, windings BA, windings BC, windings CB, windings CA, and windings AC. In some examples, the three phases A, B, and C adopt the delta connection; and the driver circuit 171 is further configured to separately make each group of three-phase windings 11 of the electric motor 12 conducted.

In some examples, as shown in FIGS. 2 and 4, the driver circuit 171 is electrically connected to each winding of the electric motor 12 and configured to transmit a current from the battery pack 30 to each winding to drive the electric motor 12 to rotate. In this example, the electric motor 12 is the three-phase brushless motor 12, the multi-phase windings are specifically the three-phase windings 11, the three-phase windings 11 include the three phases A, B, and C, and the driver circuit 171 is electrically connected to the three phases A, B, and C of the three-phase windings 11 and configured to transmit a current from the battery pack 30 to the three-phase windings 11 to drive the electric motor 12 to rotate. In an example, the multiple switches include switching elements VT1, VT2, VT3, VT4, VT5, and VT6. A gate terminal of each switching element is electrically connected to the controller 17 and configured to receive a control signal from the controller 17. A drain or source of each switching element is connected to one of the three-phase windings 11 of the electric motor 12. The switching elements VT1 to VT6 receive the control signals from the controller 17 to change their respective on states, thereby changing the current loaded by the battery pack 30 to the three-phase windings 11 of the electric motor 12.

In an example, drains of the switching elements VT1, VT3, and VT5 are electrically connected to a positive electrode of the battery pack 30, and sources of the switching elements VT6, VT4, and VT2 are electrically connected to a negative electrode of the battery pack 30; and a drain of the switching element VT6 is electrically connected to a source of the switching element VT1, a drain of the switching element VT4 is electrically connected to a source of the switching element VT3, and a drain of the switching element VT2 is electrically connected to a source of the switching element VT5. A power terminal of a winding A is electrically connected between the drain of the switching element VT6 and the source of the switching element VT1; a power terminal of a winding B is electrically connected between the drain of the switching element VT4 and the source of the switching element VT3; and a power terminal of a winding C is electrically connected between the drain of the switching element VT2 and the source of the switching element VT5.

Based on the preceding examples, as shown in FIG. 4, the three phases A, B, and C of the three-phase windings 11 adopt the star connection. When the switching elements VT1 and VT4 are turned on, the windings AB are conducted; when the switching elements VT3 and VT6 are turned on, the windings BA are conducted; when the switching elements VT1 and VT2 are turned on, the windings AC are conducted; when the switching elements VT5 and VT6 are turned on, the windings CA are conducted; when the switching elements VT3 and VT2 are turned on, the windings BC are conducted; when the switching elements VT5 and VT4 are turned on, the windings CB are conducted. Therefore, the on states of the switching elements are controlled so that two different phases of windings can be conducted. This example is used to illustrate how to switch the conducted state of the multi-phase windings by controlling the on states of the switching elements to drive the electric motor 12. When the driver circuit 171 has a different structure, the driver circuit 171 is connected to the three phases A, B, and C of the three-phase windings 11 in a different manner, and the controller 17 performs control in a different manner, which are not specifically limited here, adaptive adjustments may be performed according to actual requirements.

In some examples, as shown in FIGS. 2 and 4, the driver circuit 171 may be a three-phase bridge driver circuit including six controllable semiconductor power devices (such as field-effect transistors (FETs), bipolar junction transistors (BJTs), or insulated-gate bipolar transistors (IGBTs)). It is to be understood that the switching elements may be any other types of solid-state switches, such as the IGBTs or the BJTs.

In some examples, the power tool 20 further includes a control board, the controller 17 and the driver circuit 171 are disposed on the control board, and the control board includes a printed circuit board (PCB) and a flexible printed circuit (FPC). The controller 17 adopts a dedicated control chip such as a single-chip microcomputer or a microcontroller unit (MCU). The controller 17 specifically controls on or off states of the switching elements in the driver circuit 171 through the control chip. In some examples, the controller 17 controls the ratio of an on time of a driving switching element to an off time of the driving switching element based on a pulse-width modulation (PWM) signal. It is to be noted that the control chip may be integrated into the controller 17 or may be disposed independently of the controller 17. A structural relationship between the control chip and the controller 17 is not limited in this example.

As shown in FIG. 4, the power tool 20 further includes a detection assembly 50 configured to detect a working state of the power tool 20. The detection assembly 50 is communicatively connected to the controller 17, making it convenient for the controller 17 to acquire the working state of the power tool 20 detected by the detection assembly 50. In some examples, the working state of the power tool 20 includes a load parameter of the electric motor 12, the detection assembly 50 is configured to detect the load parameter of the electric motor 12, and the controller 17 directly acquires the load parameter of the electric motor 12 through the detection assembly 50. In some examples, the working state of the power tool 20 includes an operating parameter of the electric motor 12, the detection assembly 50 detects the operating parameter of the electric motor 12, and the controller 17 is configured to acquire the operating parameter of the electric motor 12 through the detection assembly 50 to calculate the load parameter of the electric motor 12.

The load parameter of the electric motor 12 is a mechanical load generated during the operation of the electric motor 12 and is generally composed of a torque load of the electric motor and an inertial load of the electric motor. A magnitude of the load parameter is an important indicator for measuring an operating state of the electric motor 12 and is also one of key parameters for design and optimization of the electric motor 12. In some examples, the load parameter of the electric motor 12 includes at least one of load torque, load inertia, and load damping. In some examples, the operating parameter of the electric motor 12 includes at least one of a current of the electric motor 12, a rotational speed of the electric motor 12, and a temperature of the electric motor 12, and the load parameter of the electric motor 12 is calculated according to at least one of the current of the electric motor 12, the rotational speed of the electric motor 12, and the temperature of the electric motor 12.

The load torque refers to external resistance torque that the electric motor 12 needs to overcome, which directly affects the rotational speed and the operating state of the electric motor 12. In some examples, the detection assembly 50 is configured to detect the load torque. Specifically, the detection assembly 50 includes a torque sensor, and the torque sensor is disposed on the output shaft of the electric motor 12 and thus can detect the load torque. The load inertia is a physical quantity that describes the rotational inertia of a load object and is related to the mass and centroid distance of the load object. In some examples, the detection assembly 50 is configured to detect acceleration and torque of the load. Specifically, the detection assembly 50 further includes an acceleration sensor, where changes in the acceleration and torque of the load are measured so that the load inertia is calculated. The load damping is a physical quantity that describes how the load hinders the movement of the electric motor 12. The load damping is generally related to factors such as friction and viscous resistance of the load. In some examples, the detection assembly 50 is configured to detect the acceleration of the electric motor 12 and the speed of the electric motor 12 and obtain the load damping through the acceleration and the speed of the electric motor 12.

In some examples, as shown in FIG. 4, the detection assembly 50 is configured to detect the current of the electric motor 12, and a magnitude of the current of the electric motor 12 directly reflects a load situation of the electric motor 12. During the operation of the electric motor 12, the heavier the load, the greater current required by the electric motor 12. A direct relationship exists between the load torque and the current of the electric motor 12. In some examples, the current of the electric motor 12 may be measured, and the load torque may be estimated in conjunction with a torque constant (or torque-current characteristic) of the electric motor 12. The current of the electric motor 12 includes at least one of a bus current of the electric motor 12 and a phase current of the electric motor 12. Specifically, the detection assembly 50 includes a current detection member, and the current detection member includes a current detection resistor, a Hall current sensor, or a metal-oxide-semiconductor field-effect transistor (MOSFET) on-resistor so that one or more of the bus current and the phase current of the electric motor 12 can be detected.

In some examples, as shown in FIG. 4, the detection assembly 50 is configured to detect a voltage of the electric motor 12, the detection assembly 50 includes a voltage detection member, and the voltage detection member includes one or more of an electromagnetic voltage transformer, a Hall voltage sensor, a voltage-dividing voltage sensor, a fiber-optic voltage sensor, and a resistor divider that the voltage of the electric motor 12 can be detected. In some examples, the detection assembly 50 is configured to detect the rotational speed of the electric motor 12, and a change in the rotational speed may reflect the load situation of the electric motor 12. As the load increases, the rotational speed of the electric motor 12 generally decreases. In some examples, the detection assembly 50 includes a rotational speed detection member, and the rotational speed detection member includes one or more of a rotational speed sensor, a velocimeter, a Hall sensor, and a photoelectric sensor so that the rotational speed of the electric motor 12 can be detected. In some examples, an actual rotational speed and the rated rotational speed of the electric motor 12 are compared so that a load rate of the electric motor 12 can be estimated. In some examples, input power of the electric motor 12 is calculated according to the voltage of the electric motor 12 and the current of the electric motor 12, and then the load parameter is estimated in conjunction with the rotational speed of the electric motor 12.

In some examples, as shown in FIG. 4, the detection assembly 50 is configured to detect the temperature of the electric motor 12. In some examples, the detection assembly 50 includes a temperature detection member that detects the temperature of the electric motor 12. In some examples, the temperature detection member includes one or more of a thermocouple, a thermal resistor, and a temperature sensor so that the temperature of the electric motor 12 can be detected. In some examples, the controller 17 determines the temperature of the electric motor 12 according to a time integral of a current of the electric motor 12 greater than a preset current threshold. A change in the temperature may reflect a thermal load situation of the electric motor 12. As the load increases, an amount of heat generated by the electric motor 12 increases and the temperature increases accordingly. The preset current threshold refers to a preset current value for determining whether the electric motor 12 is in an overload state or needs to be protected during the operation of the electric motor 12. When an actual operating current of the electric motor 12 exceeds the preset current threshold, it may be considered that the electric motor 12 is likely to be in the overload state. The current of the electric motor 12 exceeding the preset current threshold is integrated in time, and the result obtained may reflect the total heat generated by the electric motor 12 due to a load increase in this time period. Due to a limited heat dissipation capability of the electric motor 12, when the generated heat exceeds the heat dissipation capability of the electric motor 12, the temperature of the electric motor 12 increases. Therefore, the temperature of the electric motor 12 may be indirectly determined according to the total heat obtained by the integration method.

The load parameter of the electric motor 12 may be comprehensively calculated in conjunction with the current of the electric motor 12, the rotational speed of the electric motor 12, and the temperature of the electric motor 12, such as the load torque and the load rate. It is to be understood that in other examples, the detection assembly 50 may be used to detect other parameters of the power tool 20 to obtain the load parameter of the electric motor 12, which are not specifically limited here, and merely examples are given here.

In some examples, the detection assembly 50 is further configured to detect a commutation interval of the electric motor 12. In some examples, the detection assembly 50 includes a rotor position detection member, and the rotor position detection member detects a rotor position of the electric motor 12 to obtain the commutation interval of the electric motor 12. Specifically, the rotor position detection member includes a position sensor. In some examples, the detection assembly 50 includes a timer, a time interval between two adjacent commutations of the electric motor 12 is measured by the timer, and the commutation interval is determined according to a relationship between an angle of the electric motor 12 and the rotational speed of the electric motor 12. It is to be understood that in other examples, the commutation interval of the electric motor 12 may be obtained in other manners, and merely an example is given here.

In some examples, as shown in FIGS. 2 and 5, the working state of the power tool 20 further includes battery pack data of the battery pack 30, and the detection assembly 50 is configured to detect the battery pack data, where the battery pack data refers to various parameters and performance indicators of the battery pack 30. In some examples, the battery pack data includes at least one of a real-time state parameter and preset information. The real-time state parameter of the battery pack 30 refers to a series of data for describing a current working state and performance of the battery pack 30. In some examples, the real-time state parameter includes at least one of a battery pack temperature, a battery pack voltage, a battery pack state of charge, and a battery pack state of power. The preset information of the battery pack 30 refers to a series of parameters, conditions, or rules preset during the design, manufacturing, use, and maintenance of the battery pack 30. The preset information is of great significance to the normal operation, performance optimization, and safety control of the battery pack 30. In some examples, the preset information includes at least one of the number of parallel cells and an internal resistance.

In some examples, as shown in FIGS. 2 and 5, the detection assembly 50 is configured to detect the battery pack voltage. In some examples, two voltage detection members are provided, which are a first voltage detection member and a second voltage detection member, respectively. The first voltage detection member is configured to detect the voltage of the electric motor 12, and the second voltage detection member is configured to detect the battery pack voltage. Specifically, the second voltage detection member includes one or more of the electromagnetic voltage transformer, the Hall voltage sensor, the voltage-dividing voltage sensor, the fiber-optic voltage sensor, and the resistor divider so that the battery pack voltage can be detected.

In some examples, the detection assembly 50 is configured to detect the battery pack temperature. In some examples, multiple temperature detection members are provided, at least one is a first temperature detection member, and at least one is a second temperature detection member. The first temperature detection member is configured to detect the temperature of the electric motor 12, and the second temperature detection member is configured to detect the battery pack temperature. Specifically, the second temperature detection member includes the temperature sensor that detects the battery pack temperature.

The battery pack state of charge (SOC) refers to the ratio of a remaining capacity of the battery pack 30 after a certain time period of use or after unused for a long time to a capacity of the battery pack 30 in a fully charged state and is generally expressed as a percentage. The battery pack state of power (SOP) refers to maximum power that can be input into or output from the battery pack 30 in a current state and reflects maximum energy support that can be provided by the battery pack 30 in a short time. In some examples, the detection assembly 50 is configured to detect a battery pack current. According to the battery pack voltage, the battery pack current, the battery pack temperature, etc., at least one of the battery pack state of charge and the battery pack state of power is estimated by an algorithm. In other examples, the battery pack state of charge and the battery pack state of power may be obtained in other manners, which are not specifically limited here, and merely examples are given here.

In some examples, the detection assembly 50 is further configured to detect a temperature of the control board. In some examples, at least one temperature detection member is a third temperature detection member configured to detect the temperature of the control board. Specifically, the third temperature detection member includes the temperature sensor so that the temperature of the control board can be conveniently detected.

As shown in FIGS. 1 to 4, the power tool 20 includes a battery pack interface 60, the battery pack interface 60 is connected to the battery pack 30 to supply power to the electric motor 12, and the battery pack interface 60 provides electrical energy output from the connected battery pack 30 to the driver circuit 171. In some examples, the battery pack interface 60 includes a terminal assembly, and the terminal assembly includes electrode terminals 61 electrically connected to the driver circuit 171 and a signal terminal 62 communicatively connected to the controller 17. Since the electrode terminals 61 are electrically connected to the driver circuit 171, when the battery pack 30 is connected to the battery pack interface 60, the battery pack 30 transmits electrical energy to the driver circuit 171 through the electrode terminals 61. Since the signal terminal 62 is communicatively connected to the controller 17, when the battery pack 30 is connected to the battery pack interface 60, the battery pack 30 communicates with the controller 17 through the signal terminal 62.

In some examples, as shown in FIGS. 1 and 3, the battery pack 30 includes a housing 301 and a cell group, and the housing 301 is assembled to form an accommodation space to fix and accommodate the cell group. The cell group includes one or more cells configured to store or output electrical energy. Multiple cells are connected in series, in parallel, or in series and parallel to form the cell group. The battery pack 30 further includes a power tool interface 302, and the power tool interface 302 is disposed on the housing 301 and configured to be electrically connected to the battery pack interface 60 so that the battery pack 30 is mounted on the power tool 20.

The battery pack 30 includes a communication unit electrically connected to the power tool interface 302 and configured to communicate with the controller 17. The communication unit is configured to at least output the battery pack data when communicating with the controller 17. The communication unit is a key component for implementing data transmission and communication between the battery pack 30 and another device or system. In some examples, when the power tool interface 302 is electrically connected to the battery pack interface 60, the communication unit communicates with the controller 17 through the signal terminal 62.

In some examples, the real-time state parameter is directly sent by the battery pack 30 to the controller 17 through the signal terminal 62. In some examples, the communication unit includes a battery management system (BMS), and the BMS is an important system for monitoring and management in the battery pack 30 and also undertakes the main role of communication of the battery pack 30. The battery management system exchanges data with the power tool 20 through a communication interface and outputs at least the battery pack data to the power tool 20. In some examples, the battery management system monitors the battery pack 30 to obtain the real-time state parameter such as the battery pack voltage, the battery pack current, and the battery pack temperature and directly sends the real-time state parameter to the controller 17 through the signal terminal 62. In some examples, the controller 17 calculates the real-time state parameter according to a signal received through the signal terminal 62. Specifically, the controller 17 calculates the real-time state parameter such as the battery pack state of charge and the battery pack state of power according to signals such as the battery pack voltage, the battery pack current, and the battery pack temperature received through the signal terminal 62. It is to be understood that in other examples, the communication unit may further include a battery management chip to communicate with the power tool 20 through a communication interface of the battery management chip. A specific structure of the communication unit is not specifically limited here, and merely examples are given here.

In some examples, as shown in FIGS. 1 to 4, the controller 17 acquires, through the signal terminal 62, the preset information of the battery pack 30 connected to the battery pack interface 60. The preset information includes at least one of the number of parallel cells and the internal resistance. During installation and configuration of the battery management system, parameters of the battery management system generally need to be configured according to the preset information. Therefore, when the battery pack 30 is connected to the battery pack interface 60, the battery management system of the battery pack 30 may directly send the preset information such as the number of parallel cells and the internal resistance to the controller 17 through the signal terminal 62.

During use of the power tool 20, the operating state of the electric motor 12 generally needs to be adjusted in real time according to a change of the load so that the electric motor 12 can quickly respond to the change of the load, thereby improving the stability and response speed of the system. Specifically, the controller 17 is configured to determine an extended conduction parameter of the multi-phase windings according to the load parameter. The extended conduction parameter of the multi-phase windings generally refers to a series of conduction-related parameters introduced to optimize the performance of the electric motor 12 and improve the operating efficiency during operation of the electric motor 12. In some examples, the extended conduction parameter of the electric motor 12 includes a conduction band and an advanced angle.

The multi-phase windings of the electric motor 12 refer to a system composed of multiple different phases of windings in the electric motor 12. A current through each winding is different in phase to generate a rotating magnetic field and drive the electric motor 12 to rotate. The conduction band may be understood as a conductive or working region of each winding during operation of the electric motor 12. Specifically, during operation of the electric motor 12, the windings with different phases are conducted and disconnected according to a certain sequence and time interval to generate a continuous rotating magnetic field. In this process, a conducted time period of each winding and a corresponding current phase form a conduction band of the winding.

The advanced angle, also referred to as a phase advanced angle, refers to a magnitude of an angle by which a phase of a rotor current of the electric motor 12 leads a phase of the voltage of the electric motor 12. During operation of the electric motor 12, a certain phase difference exists between the current and voltage of the electric motor 12 due to the existence of parameters such as resistance, inductance, and capacitance of the electric motor 12. The phase difference is the advanced angle. The advanced angle is a very important parameter in the control of the brushless direct current motor 12. The advanced angle is adjusted so that the operating efficiency and performance of the electric motor 12 can be optimized to reduce noise and vibration.

In some examples, as shown in FIG. 4, the controller 17 is configured to reduce the extended conduction parameter when the load parameter reaches a load parameter threshold so that the electric motor 12 exits extended conduction. In the related art, during use of the power tool 20, no matter which battery pack 30 is connected, the load parameter threshold is a fixed value, and so the performance of the battery pack 30 cannot be fully utilized.

In some examples, as shown in FIG. 4, the controller 17 is configured to determine the conduction band and/or the advanced angle of the multi-phase windings according to the real-time state parameter and the load parameter. The real-time state parameter refers to a series of data for describing the current working state and performance of the battery pack 30. In some examples, the real-time state parameter includes at least one of the battery pack temperature, the battery pack voltage, the battery pack state of charge, and the battery pack state of power. Therefore, the conduction band and/or the advanced angle of the multi-phase windings are determined according to the real-time state parameter and the load parameter so that the conduction band and/or the advanced angle of the multi-phase windings can be different according to a different battery pack 30 adapted, that is, different extension performance can be utilized according to different battery packs 30 and the performance of the battery pack 30 can be more fully utilized.

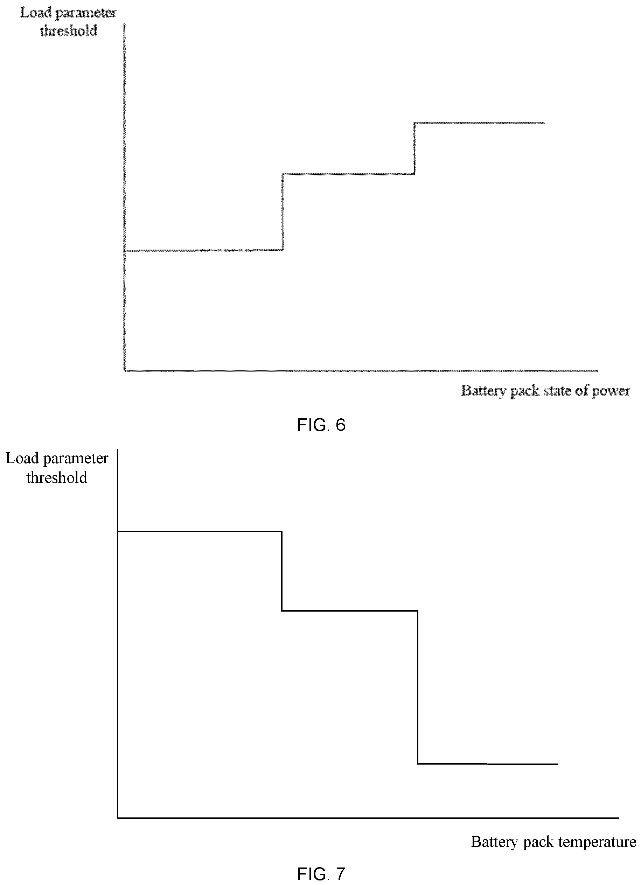

In some examples, as shown in FIG. 5, the controller 17 is configured to, if the battery pack state of power is a first state of power, reduce the conduction band when the load parameter reaches a first threshold; and if the battery pack state of power is a second state of power, reduce the conduction band when the load parameter reaches a second threshold; where the first state of power is greater than the second state of power, and the first threshold is greater than the second threshold. Therefore, when the battery pack state of power is relatively large, the conduction band is reduced when the load parameter is relatively large, so as to exit the extended conduction. FIG. 6 shows a correlation relationship between the battery pack state of power and the load parameter threshold. As shown in FIG. 6, when the battery pack state of power is relatively large, the corresponding load parameter threshold is relatively large to exist the extended conduction. In this solution, when the battery pack state of power is relatively large, the conduction band is reduced when the load parameter is relatively large so that an occasion of exiting the extended conduction can better comply with an actual situation of the battery pack 30, and the performance of the battery pack 30 can be more fully utilized.

It is to be understood that specific values of the first threshold and the second threshold are different according to different battery packs 30 and different magnitudes of the first state of power and the second state of power. In some examples, the correlation relationship between the battery pack state of power and the load parameter threshold may be tested in advance. Subsequently, according to an actual current battery pack state of power and the correlation relationship, a load parameter threshold corresponding to the current battery pack state of power may be obtained. In some examples, the correlation relationship between the battery pack state of power and the load parameter threshold is presented as a curve in FIG. 6. Thus, after the battery pack state of power is obtained, the corresponding load parameter threshold may be obtained according to the curve of the correlation relationship between the battery pack state of power and the load parameter threshold. The battery pack state of power is the first state of power, for example. Then, the corresponding ordinate when the abscissa is the first state of power is found in the curve so that the first threshold corresponding to the first state of power can be obtained. Similarly, the second threshold corresponding to the second state of power can be obtained, and the details are not repeated here. It is to be understood that in other examples, specific magnitudes of the first state of power, the second state of power, the first threshold, and the second threshold may be obtained in other manners, which are not specifically limited here, and merely examples are given here.

In some examples, as shown in FIG. 5, the controller 17 is configured to, if the battery pack temperature is a first temperature, reduce the conduction band when the load parameter reaches a third threshold; and if the battery pack temperature is a second temperature, reduce the conduction band when the load parameter reaches a fourth threshold; where the first temperature is higher than the second temperature, and the third threshold is less than the fourth threshold. Therefore, when the battery pack temperature is relatively high, the conduction band is reduced when the load parameter is relatively small, so as to exit the extended conduction. FIG. 7 shows a correlation relationship between the battery pack temperature and the load parameter threshold. It can be seen that when the battery pack temperature is relatively high, the corresponding load parameter threshold is relatively small to exist the extended conduction. In this solution, when the battery pack temperature is relatively high, the conduction band is reduced when the load parameter is relatively small so that the occasion of exiting the extended conduction can better comply with the actual situation of the battery pack 30, and the performance of the battery pack 30 can be more fully utilized.

It is to be understood that specific values of the third threshold and the fourth threshold are different according to different battery packs 30 and different magnitudes of the first temperature and the second temperature. In some examples, the correlation relationship between the battery pack temperature and the load parameter threshold may be tested in advance. Subsequently, according to an actual current battery pack temperature and the correlation relationship, a load parameter threshold corresponding to the current battery pack temperature may be obtained. In some examples, the correlation relationship between the battery pack temperature and the load parameter threshold is presented as a curve in FIG. 7. Thus, after the battery pack temperature is obtained, the corresponding load parameter threshold may be obtained according to the curve of the correlation relationship between the battery pack temperature and the load parameter threshold. The battery pack temperature is the first temperature, for example. Then, the corresponding ordinate when the abscissa is the first temperature is found in the curve so that the third threshold corresponding to the first temperature can be obtained. Similarly, the fourth threshold corresponding to the second temperature can be obtained, and the details are not repeated here. It is to be understood that in other examples, specific magnitudes of the first temperature, the second temperature, the third threshold, and the fourth threshold may be obtained in other manners, which are not specifically limited here, and merely examples are given here.

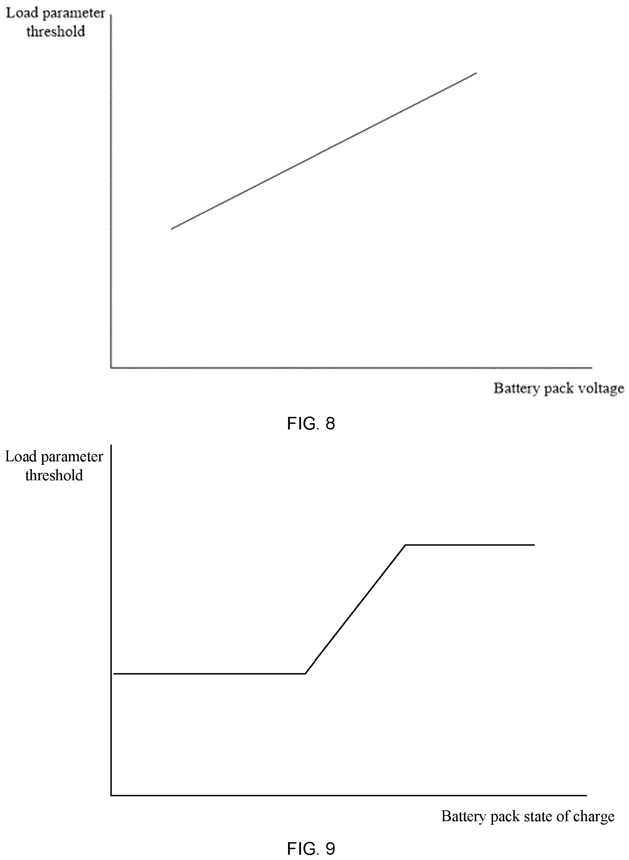

In some examples, as shown in FIG. 5, the controller 17 is configured to, if the battery pack voltage is a first voltage, reduce the conduction band when the load parameter reaches a fifth threshold; and if the battery pack voltage is a second voltage, reduce the conduction band when the load parameter reaches a sixth threshold; where the first voltage is higher than the second voltage, and the fifth threshold is greater than the sixth threshold. Therefore, when the battery pack voltage is relatively large, the conduction band is reduced when the load parameter is relatively large, so as to exit the extended conduction. FIG. 8 shows a correlation relationship between the battery pack voltage and the load parameter threshold. As shown in FIG. 8, when the battery pack voltage is relatively large, the corresponding load parameter threshold is relatively large to exist the extended conduction. In this solution, when the battery pack voltage is relatively large, the conduction band is reduced when the load parameter is relatively large so that the occasion of exiting the extended conduction can better comply with the actual situation of the battery pack 30, and the performance of the battery pack 30 can be more fully utilized.

It is to be understood that specific values of the fifth threshold and the sixth threshold are different according to different battery packs 30 and different magnitudes of the first voltage and the second voltage. In some examples, the correlation relationship between the battery pack voltage and the load parameter threshold may be tested in advance. Subsequently, according to an actual current battery pack voltage and the correlation relationship, a load parameter threshold corresponding to the current battery pack voltage may be obtained. In some examples, the correlation relationship between the battery pack voltage and the load parameter threshold is presented as a curve in FIG. 8. Thus, after the battery pack voltage is obtained, the corresponding load parameter threshold may be obtained according to the curve of the correlation relationship between the battery pack voltage and the load parameter threshold. The battery pack voltage is the first voltage, for example. Then, the corresponding ordinate when the abscissa is the first voltage is found in the curve so that the fifth threshold corresponding to the first voltage can be obtained. Similarly, the sixth threshold corresponding to the second voltage can be obtained, and the details are not repeated here. It is to be understood that in other examples, specific magnitudes of the first voltage, the second voltage, the fifth threshold, and the sixth threshold may be obtained in other manners, which are not specifically limited here, and merely examples are given here.

In some examples, as shown in FIG. 5, the controller 17 is configured to, if the battery pack state of charge is a first state of charge, reduce the conduction band when the load parameter reaches a seventh threshold; and if the battery pack state of charge is a second state of charge, reduce the conduction band when the load parameter reaches an eighth threshold; where the first state of charge is greater than the second state of charge, and the seventh threshold is greater than the eighth threshold. Therefore, when the battery pack state of charge is relatively large, the conduction band is reduced when the load parameter is relatively large, so as to exit the extended conduction. FIG. 9 shows a correlation relationship between the battery pack state of charge and the load parameter threshold. As shown in FIG. 9, when the battery pack state of charge is relatively large, the corresponding load parameter threshold is relatively large to exist the extended conduction. In this solution, when the battery pack state of charge is relatively large, the conduction band is reduced when the load parameter is relatively large so that the occasion of exiting the extended conduction can better comply with the actual situation of the battery pack 30, and the performance of the battery pack 30 can be more fully utilized.

It is to be understood that specific values of the seventh threshold and the eighth threshold are different according to different battery packs 30 and different magnitudes of the first state of charge and the second state of charge. In some examples, the correlation relationship between the battery pack state of charge and the load parameter threshold may be tested in advance. Subsequently, according to an actual current battery pack state of charge and the correlation relationship, a load parameter threshold corresponding to the current battery pack state of charge may be obtained. In some examples, the correlation relationship between the battery pack state of charge and the load parameter threshold is presented as a curve in FIG. 9. Thus, after the battery pack state of charge is obtained, the corresponding load parameter threshold may be obtained according to the curve of the correlation relationship between the battery pack state of charge and the load parameter threshold. The battery pack state of charge is the first state of charge, for example. Then, the corresponding ordinate when the abscissa is the first state of charge is found in the curve so that the seventh threshold corresponding to the first state of charge can be obtained. Similarly, the eighth threshold corresponding to the second state of charge can be obtained, and the details are not repeated here. It is to be understood that in other examples, specific magnitudes of the first state of charge, the second state of charge, the seventh threshold, and the eighth threshold may be obtained in other manners, which are not specifically limited here, and merely examples are given here.

In some examples, as shown in FIG. 5, the controller 17 is configured to reduce the conduction band when the commutation interval is greater than a preset interval threshold or a difference between the commutation interval and a locked-rotor protection time is less than a preset difference threshold. The commutation interval refers to a time required for the electric motor 12 to switch from one rotation direction to another rotation direction. This time interval generally includes stages such as deceleration, stop, and reverse acceleration of the electric motor 12. The preset interval threshold refers to a preset time or angle threshold for determining whether the commutation process of the electric motor 12 is normal. The preset interval threshold is generally determined according to a characteristic of the electric motor 12, a load condition, and a requirement of a control system, and a specific magnitude of the preset interval threshold is not specifically limited here. The locked-rotor protection time of the electric motor 12 refers to a time for which a protection system of the electric motor 12 starts and acts continuously until the electric motor 12 is protected or released from a failure when the shaft of the electric motor 12 is stuck and cannot rotate normally due to an excessive load, a mechanical failure, or an external factor during startup or operation of the electric motor 12.

When the commutation interval of the electric motor 12 is greater than the preset interval threshold, it may indicate that the electric motor 12 has difficulty in the commutation process. For example, the electric motor 12 may fail to decelerate, stop, and accelerate reversely in time due to the excessive load, an internal failure, or a power problem. In this case, the electric motor 12 may be in a locked-rotor state or about to enter the locked-rotor state. The preceding solution can ensure that even if the load parameter threshold is too large and the electric motor cannot exit the extended conduction in time, the commutation interval can be used to ensure that the conduction band is reduced during a locked rotor, so as to completely exit the extended conduction, thereby reducing a locked-rotor current, avoiding damage to the electric motor 12, and prolonging the service life of the electric motor 12.

When the difference between the commutation interval and the locked-rotor protection time is less than the preset difference threshold, it indicates that the electric motor 12 may have difficulty in the commutation process and has a risk of the locked rotor. In this case, the conduction band is reduced so that the reliability of locked-rotor protection can be further enhanced. After the conduction band is reduced, the electric motor 12 is more sensitive to parameters such as current and temperature in the commutation process. Once the electric motor 12 shows a sign of the locked rotor, the protection system can detect the locked rotor and take corresponding protection measures more quickly, thereby reducing the locked-rotor current, avoiding damage to the electric motor 12, and prolonging the service life of the electric motor 12.

In some examples, as shown in FIG. 5, the controller 17 is further configured to, when the temperature of the control board is higher than a preset control board temperature threshold, reduce the conduction band or reduce the load parameter threshold of the load parameter. The preset control board temperature threshold refers to a highest temperature limit allowed in a working process of the control board of the power tool 20. When the temperature of the control board is higher than the preset control board temperature threshold, the conduction band is reduced or the load parameter threshold of the load parameter is reduced so that a working load of the control board can be reduced, thereby reducing heat generation and preventing the control board from being damaged due to overheating.

In some examples, the controller 17 is further configured to, when the temperature of the electric motor 12 is higher than a preset motor temperature threshold, reduce the conduction band or reduce the load parameter threshold of the load parameter. The preset motor temperature threshold refers to a highest temperature limit allowed in a working process of the electric motor 12 of the power tool 20. When the temperature of the electric motor 12 is higher than the preset motor temperature threshold, it indicates that the electric motor 12 may be in an overload or locked-rotor state. In this case, the conduction band is reduced so that the current and power output of the electric motor 12 can be reduced, thereby reducing heat generation and protecting the electric motor 12 from damage. The load parameter threshold is reduced so that a working load of the electric motor 12 can be reduced, and the electric motor 12 can work within a safer temperature range.

In some examples, as shown in FIGS. 1 and 5, the controller 17 is further configured to, when a continuous working duration of the power tool 20 under a preset load parameter is greater than a preset duration threshold, reduce the conduction band or reduce the load parameter threshold of the load parameter. The preset load parameter refers to a load range or a load characteristic allowed under a normal working condition of the power tool 20. When the power tool 20 works continuously for a long time, the electric motor 12 and the control board may generate a large amount of heat due to continuous high-load operation. When the continuous working duration of the power tool 20 under the preset load parameter is greater than the preset duration threshold, the conduction band is reduced so that the current and power output of the electric motor 12 can be reduced, thereby reducing heat generation and helping to prevent the electric motor 12 and the control board from overheating. When the continuous working duration of the power tool 20 under the preset load parameter is greater than the preset duration threshold, the load parameter threshold is reduced so that the overall load of the power tool 20 can be reduced, thereby further reducing heat generation and protecting the power tool 20 from damage at high temperatures.

In some examples, one battery pack interface 60 is provided, the one battery pack interface 60 may be adapted to one or more battery packs 30, and the one battery pack interface 60 can be electrically connected to one battery pack 30. In some examples, multiple battery pack interfaces 60 are provided, and each battery pack interface 60 can be electrically connected to one battery pack 30.

In the case where the multiple battery pack interfaces 60 are connected to multiple battery packs 30, the controller 17 is configured to acquire, through the signal terminal 62 or the detection assembly 50, the battery pack data of each of the multiple battery packs 30 connected to the multiple battery pack interfaces 60; identify a battery pack 30 with a weakest discharge capability according to the battery pack data of each of the multiple battery packs 30; acquire the load parameter of the electric motor 12 through the detection assembly 50; and determine the conduction band and/or the advanced angle of the multi-phase windings according to the battery pack data of the battery pack 30 with the weakest discharge capability and the load parameter.

The battery pack 30 with the weakest discharge capability often determines an upper performance limit of all the battery packs 30. If the conduction band is adjusted based on the discharge capability of this battery pack 30, it can be ensured that all the battery packs 30 work in a relatively balanced state, preventing some battery packs 30 from being damaged due to excessive discharge and ensuring optimal discharge efficiency of the entire battery system. Moreover, a discharge depth of all the battery packs 30 can be limited, thereby prolonging the service lives of all the battery packs 30. Additionally, if a certain battery pack 30 is subjected to an excessive discharge current due to a relatively weak discharge capability, safety problems such as overheating and a short circuit may be caused. The conduction band and/or the advanced angle of the multi-phase windings are determined according to the battery pack data of the battery pack 30 with the weakest discharge capability and the load parameter so that the discharge current of all the battery packs 30 can be limited, thereby reducing safety risks.

In some examples, as shown in FIGS. 1 and 5, the battery pack data includes the preset information. In some examples, the preset information includes the number of parallel cells, and the controller 17 is configured to determine a battery pack 30 with a smallest number of parallel cells as the battery pack 30 with the weakest discharge capability. The number of parallel cells refers to the number of cells forming a parallel connection relationship when positive electrodes and negative electrodes of the multiple cells in the battery pack 30 are connected separately. When the cells are connected in parallel, the cells have the same voltage, but the capacity can be accumulated. However, due to a slight performance difference between cells, the battery pack 30 after the parallel connection may have inconsistent voltages during discharge. The voltage consistency of the battery pack 30 with a smaller number of parallel cells is more easily affected and thus the battery pack 30 exhibits a weaker discharge capability. Therefore, the battery pack 30 with the smallest number of parallel cells may be determined as the battery pack 30 with the weakest discharge capability.

In some examples, the preset information includes the internal resistance, and the controller 17 is configured to determine a battery pack 30 with a largest internal resistance as the battery pack 30 with the weakest discharge capability. The internal resistance of the battery pack 30 refers to a resistance exerted on a current flowing through the inside of the battery pack 30 that is working. During discharge of the battery pack 30, the internal resistance consumes part of the voltage, and so the output voltage of the battery pack 30 decreases. Therefore, when the internal resistance of the battery pack 30 increases, a voltage drop increases under the same discharge current, and so the output voltage of the battery pack 30 decreases. The decrease of the output voltage directly affects the discharge capability of the battery pack 30, and so the battery pack 30 can provide less power. Meanwhile, when the internal resistance of the battery pack 30 increases, more heat is generated under the same discharge current and time, and so the discharge efficiency of the battery pack 30 decreases. Therefore, the battery pack 30 with the largest internal resistance may be determined as the battery pack 30 with the weakest discharge capability.

In some examples, the battery pack data includes real-time state information. In some examples, the real-time state information includes the battery pack state of power, and the controller 17 is configured to determine a battery pack 30 with a smallest battery pack state of power as the battery pack 30 with the weakest discharge capability. The state of power of the battery pack 30 generally refers to maximum power that the battery pack 30 can continuously provide under certain conditions (such as a particular voltage range and temperature). The discharge capability refers to comprehensive performance of a current that can be provided by the battery pack 30 and a continuous duration during discharge. In general, the state of power of the battery pack 30 is directly proportional to the discharge capability of the battery pack 30, that is, the higher the state of power, the greater the current that can be provided by the battery pack 30 and the continuous duration during discharge, and vice versa. Therefore, the battery pack 30 with the smallest battery pack state of power may be determined as the battery pack 30 with the weakest discharge capability.

In some examples, as shown in FIGS. 1 and 5, the real-time state information includes the battery pack temperature, and the controller 17 is configured to determine a battery pack 30 with a highest battery pack temperature as the battery pack 30 with the weakest discharge capability. The high temperatures have adverse effects on an internal chemical reaction, the internal resistance, a cycle life, safety, and other aspects of the battery pack 30, which jointly lead to a decrease in the discharge capability of the battery pack 30 at the high temperatures. Therefore, the battery pack 30 with the highest battery pack temperature may be determined as the battery pack 30 with the weakest discharge capability.

In some examples, the real-time state information includes the battery pack voltage, and the controller 17 is configured to determine a battery pack 30 with a lowest battery pack voltage as the battery pack 30 with the weakest discharge capability. A low battery pack voltage reflects problems such as the reduction of an active material inside the battery pack 30, serious polarization, an increase of the internal resistance, and a decrease of active material utilization. These problems jointly cause the battery pack 30 to provide limited energy, a short discharge time, and limited power output during discharge, affecting the performance of the entire system. Therefore, the battery pack 30 with the lowest battery pack voltage may be determined as the battery pack 30 with the weakest discharge capability.

In some examples, the real-time state information includes the battery pack state of charge, and the controller 17 is configured to determine a battery pack 30 with a smallest battery pack state of charge as the battery pack 30 with the weakest discharge capability. The battery pack 30 with a small battery pack state of charge means limited remaining power inside the battery pack 30. During discharge, as the power is consumed, the voltage of the battery pack 30 gradually decreases and the current decreases accordingly, causing a decrease in the discharge capability. Therefore, the battery pack 30 with the smallest battery pack state of charge may be determined as the battery pack 30 with the weakest discharge capability.

In some examples, the battery pack 30 includes a first battery pack and a second battery pack. That is to say, the power tool 20 can be adapted to at least the first battery pack and the second battery pack. That is, the battery pack interface 60 is configured to be connected to any one of the first battery pack and the second battery pack, and the battery pack interface 60 provides electrical energy output from the connected first battery pack or second battery pack to the driver circuit 171. It is to be understood that the battery pack 30 may be a lithium battery pack, a solid-state battery pack, or a pouch battery pack. In this example, the first battery pack and the second battery pack are each the lithium battery pack 30. The first battery pack and the second battery pack are examples in this example. The number of battery packs 30 to which the power tool 20 can be adapted is not limited in the present application. The second battery pack and the first battery pack differ in a size of the housing 301, the number of cells in the cell group, or the capacity of a single cell. In this example, the first battery pack and the second battery pack have the same rated voltage.

In some examples, as shown in FIGS. 1 and 5, the controller 17 is configured to determine, according to the preset information, the battery pack 30 connected to the battery pack interface 60; if the first battery pack is electrically connected to the battery pack interface 60, reduce the conduction band of the multi-phase windings when the load parameter reaches a ninth threshold; and if the second battery pack is electrically connected to the battery pack interface 60, reduce the conduction band when the load parameter reaches a tenth threshold, where the ninth threshold is different from the tenth threshold. Therefore, the conduction band can be reduced at different moments according to different battery packs 30 adapted, that is, different extension performance can be utilized according to different battery packs 30 and the performance of the battery pack 30 can be more fully utilized.

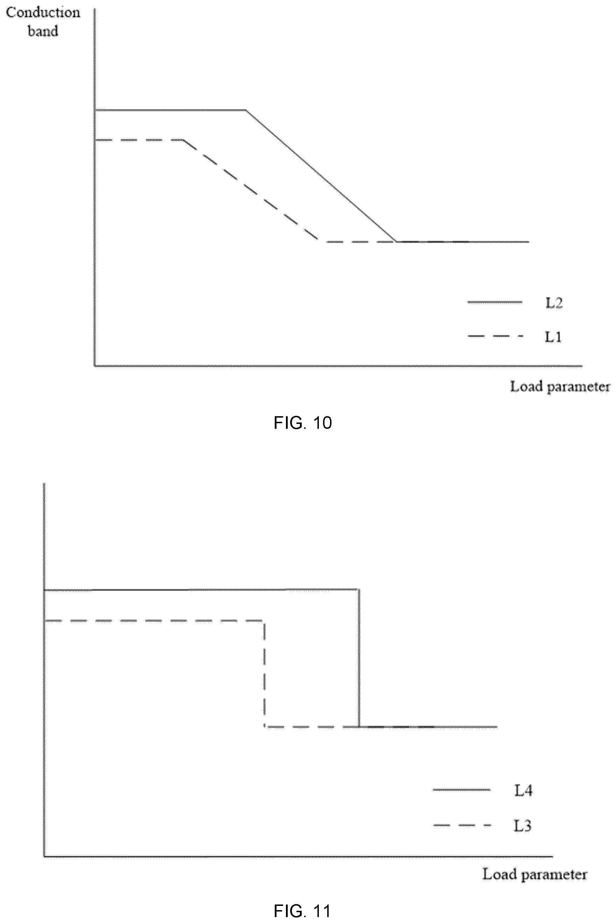

In some examples, when the number of parallel cells of the first battery pack is less than the number of parallel cells of the second battery pack, the ninth threshold is less than the tenth threshold. In a specific example, as shown in FIG. 10, the number of parallel cells of the first battery pack is 1, and the number of parallel cells of the second battery pack is 3. In FIG. 10, L1 represents a relationship curve between the load parameter and the conduction band of the first battery pack, and L2 represents a relationship curve between the load parameter and the conduction band of the second battery pack. It can be seen that in the case where the number of parallel cells is smaller, the load parameter threshold corresponding to the first battery pack is smaller, that is, the ninth threshold is less than the tenth threshold. Therefore, when the number of parallel cells of the first battery pack is less than the number of parallel cells of the second battery pack, the ninth threshold is less than the tenth threshold so that an occasion of reducing the conduction band can better comply with the actual situation of the battery pack 30 currently connected, and the performance of the battery pack 30 can be better utilized.

In some examples, when an internal resistance of the first battery pack is greater than an internal resistance of the second battery pack, the ninth threshold is less than the tenth threshold. In a specific example, as shown in FIG. 11, the internal resistance of the first battery pack is 2 mΩ, and the internal resistance of the second battery pack is 1 mΩ. In FIG. 11, L3 represents a relationship curve between the load parameter and the conduction band of the first battery pack with an internal resistance of 2 mΩ, and L4 represents a relationship curve between the load parameter and the conduction band of the second battery pack with an internal resistance of 1 mΩ. It can be seen that in the case where the internal resistance is larger, the load parameter threshold corresponding to the first battery pack is smaller, that is, the ninth threshold is less than the tenth threshold. Therefore, when the internal resistance of the first battery pack is greater than the internal resistance of the second battery pack, the ninth threshold is less than the tenth threshold so that the occasion of reducing the conduction band can better comply with the actual situation of the battery pack 30 currently connected, and the performance of the battery pack 30 can be better utilized.

In some examples, as shown in FIGS. 1 and 5, the controller 17 is configured to set the conduction band to a first value if the first battery pack is electrically connected to the battery pack interface 60; and set the conduction band to a second value if the second battery pack is electrically connected to the battery pack interface 60, where the first value is different from the second value. Therefore, different conduction bands can be set according to different battery packs 30 adapted, that is, different extension performance can be utilized according to different battery packs 30 and the performance of the battery pack 30 can be more fully utilized.

In some examples, the controller 17 is configured to, if the number of parallel cells is a first number, reduce the conduction band when the load parameter reaches an eleventh threshold; and if the number of parallel cells is a second number, reduce the conduction band when the load parameter reaches a twelfth threshold; where the first number is less than the second number, and the eleventh threshold is less than the twelfth threshold. Therefore, when the number of parallel cells is relatively small, the conduction band is reduced when the load parameter is relatively small, so as to exit the extended conduction, so that the occasion of exiting the extended conduction can better comply with the actual situation of the battery pack 30, and the performance of the battery pack 30 can be more fully utilized.

It is to be understood that specific values of the eleventh threshold and the twelfth threshold are different according to different battery packs 30 and different magnitudes of the first number and the second number. In some examples, a correlation relationship between the number of parallel cells and the load parameter threshold may be tested in advance. Subsequently, according to an actual current number of parallel cells and the correlation relationship, a load parameter threshold corresponding to the current number of parallel cells may be obtained. It is to be understood that in other examples, specific magnitudes of the first number, the second number, the eleventh threshold, and the twelfth threshold may be obtained in other manners, which are not specifically limited here, and merely examples are given here.

In some examples, as shown in FIGS. 1 and 5, the controller 17 is configured to, if the internal resistance of the battery pack 30 is a first internal resistance, reduce the conduction band when the load parameter reaches a thirteenth threshold; and if the internal resistance of the battery pack 30 is a second internal resistance, reduce the conduction band when the load parameter reaches a fourteenth threshold, where the first internal resistance is greater than the second internal resistance, and the thirteenth threshold is less than the fourteenth threshold. Therefore, when the internal resistance of the battery pack 30 is relatively large, the conduction band is reduced when the load parameter is relatively small, so as to exit the extended conduction, so that the occasion of exiting the extended conduction can better comply with the actual situation of the battery pack 30, and the performance of the battery pack 30 can be more fully utilized.

It is to be understood that specific values of the thirteenth threshold and the fourteenth threshold are different according to different battery packs 30 and different magnitudes of the first internal resistance and the second internal resistance. In some examples, a correlation relationship between the internal resistance of the battery pack 30 and the load parameter threshold may be tested in advance. Subsequently, according to an actual current internal resistance and the correlation relationship, a load parameter threshold corresponding to the current internal resistance may be obtained. It is to be understood that in other examples, specific magnitudes of the first internal resistance, the second internal resistance, the thirteenth threshold, and the fourteenth threshold may be obtained in other manners, which are not specifically limited here, and merely examples are given here.

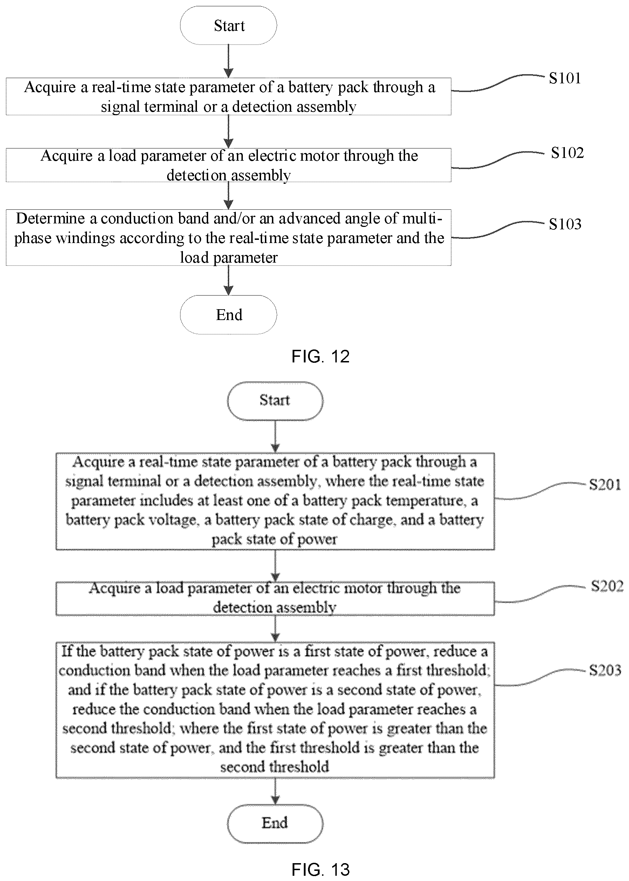

As shown in FIG. 12, a control flowchart of the power tool in the preceding example specifically includes the steps below.

In S101, a real-time state parameter of a battery pack is acquired through a signal terminal or a detection assembly.

In S102, a load parameter of an electric motor is acquired through the detection assembly.

In S103, a conduction band and/or an advanced angle of multi-phase windings are determined according to the real-time state parameter and the load parameter.

As shown in FIG. 13, a control flowchart of the power tool in the preceding example specifically includes the steps below.

In S201, a real-time state parameter of a battery pack is acquired through a signal terminal or a detection assembly, where the real-time state parameter includes at least one of a battery pack temperature, a battery pack voltage, a battery pack state of charge, and a battery pack state of power.

In S202, a load parameter of an electric motor is acquired through the detection assembly.

In S203, if the battery pack state of power is a first state of power, a conduction band is reduced when the load parameter reaches a first threshold; and if the battery pack state of power is a second state of power, the conduction band is reduced when the load parameter reaches a second threshold; where the first state of power is greater than the second state of power, and the first threshold is greater than the second threshold.

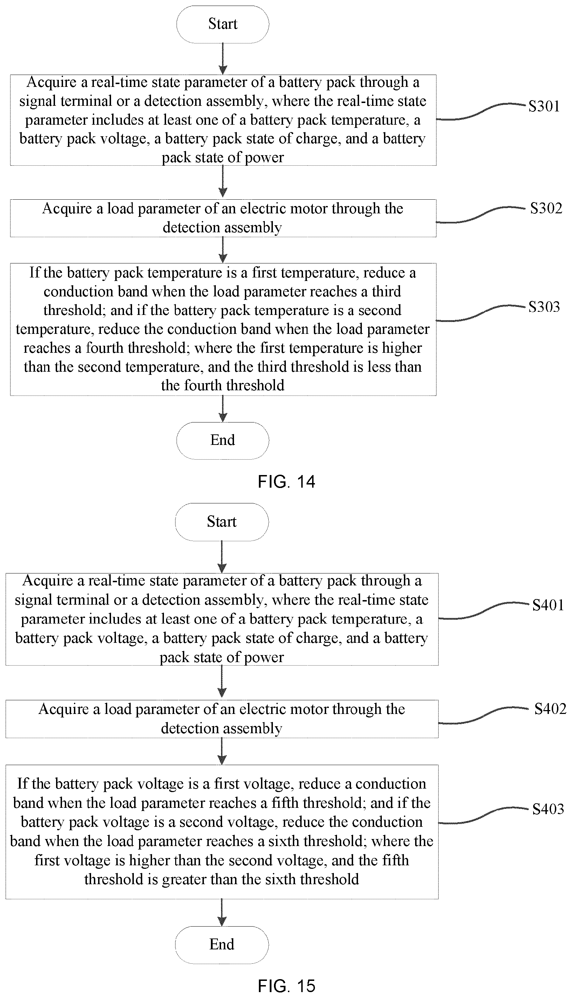

As shown in FIG. 14, a control flowchart of the power tool in the preceding example specifically includes the steps below.

In S301, a real-time state parameter of a battery pack is acquired through a signal terminal or a detection assembly, where the real-time state parameter includes at least one of a battery pack temperature, a battery pack voltage, a battery pack state of charge, and a battery pack state of power.

In S302, a load parameter of an electric motor is acquired through the detection assembly.

In S303, if the battery pack temperature is a first temperature, a conduction band is reduced when the load parameter reaches a third threshold; and if the battery pack temperature is a second temperature, the conduction band is reduced when the load parameter reaches a fourth threshold; where the first temperature is higher than the second temperature, and the third threshold is less than the fourth threshold.

As shown in FIG. 15, a control flowchart of the power tool in the preceding example specifically includes the steps below.

In S401, a real-time state parameter of a battery pack is acquired through a signal terminal or a detection assembly, where the real-time state parameter includes at least one of a battery pack temperature, a battery pack voltage, a battery pack state of charge, and a battery pack state of power.

In S402, a load parameter of an electric motor is acquired through the detection assembly.

In S403, if the battery pack voltage is a first voltage, a conduction band is reduced when the load parameter reaches a fifth threshold; and if the battery pack voltage is a second voltage, the conduction band is reduced when the load parameter reaches a sixth threshold; where the first voltage is higher than the second voltage, and the fifth threshold is greater than the sixth threshold.

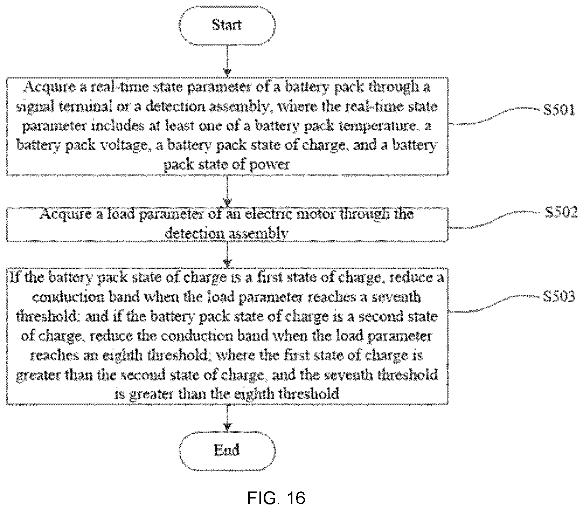

As shown in FIG. 16, a control flowchart of the power tool in the preceding example specifically includes the steps below.

In S501, a real-time state parameter of a battery pack is acquired through a signal terminal or a detection assembly, where the real-time state parameter includes at least one of a battery pack temperature, a battery pack voltage, a battery pack state of charge, and a battery pack state of power.

In S502, a load parameter of an electric motor is acquired through the detection assembly.

In S503, if the battery pack state of charge is a first state of charge, a conduction band is reduced when the load parameter reaches a seventh threshold; and if the battery pack state of charge is a second state of charge, the conduction band is reduced when the load parameter reaches an eighth threshold; where the first state of charge is greater than the second state of charge, and the seventh threshold is greater than the eighth threshold.

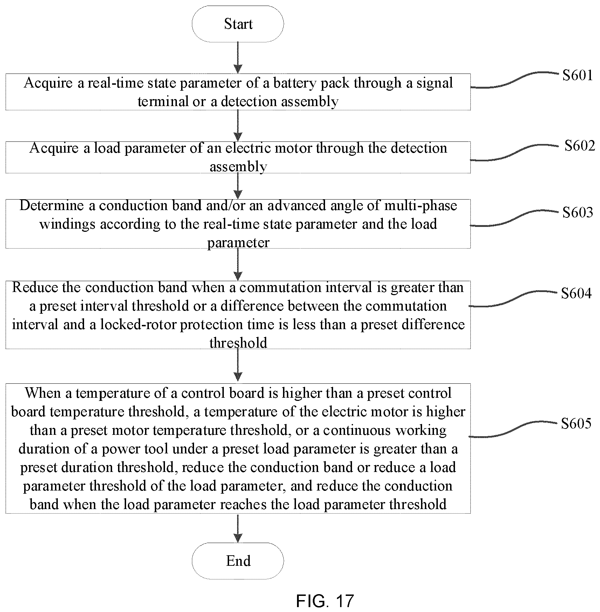

As shown in FIG. 17, a control flowchart of the power tool in the preceding example specifically includes the steps below.

In S601, a real-time state parameter of a battery pack is acquired through a signal terminal or a detection assembly.

In S602, a load parameter of an electric motor is acquired through the detection assembly.

In S603, a conduction band and/or an advanced angle of multi-phase windings are determined according to the real-time state parameter and the load parameter.

In S604, the conduction band is reduced when a commutation interval is greater than a preset interval threshold or a difference between the commutation interval and a locked-rotor protection time is less than a preset difference threshold.

In S605, when a temperature of a control board is higher than a preset control board temperature threshold, a temperature of the electric motor is higher than a preset motor temperature threshold, or a continuous working duration of the power tool under a preset load parameter is greater than a preset duration threshold, the conduction band is reduced or a load parameter threshold of the load parameter is reduced, and the conduction band is reduced when the load parameter reaches the load parameter threshold.

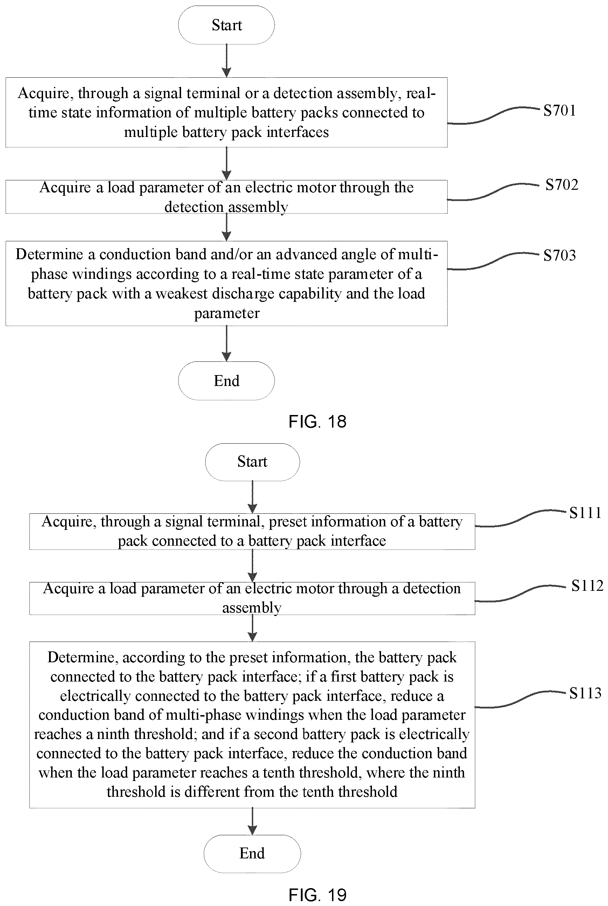

As shown in FIG. 18, a control flowchart of the power tool in the preceding example specifically includes the steps below.

In S701, real-time state information of multiple battery packs connected to multiple battery pack interfaces is acquired through a signal terminal or a detection assembly.

In S702, a load parameter of an electric motor is acquired through the detection assembly.

In S703, a conduction band and/or an advanced angle of multi-phase windings are determined according to a real-time state parameter of a battery pack with a weakest discharge capability and the load parameter.

As shown in FIG. 19, a control flowchart of the power tool system in the preceding example specifically includes the steps below.

In S111, preset information of a battery pack connected to a battery pack interface is acquired through a signal terminal.

In S112, a load parameter of an electric motor is acquired through a detection assembly.

In S113, the battery pack connected to the battery pack interface is determined according to the preset information; if a first battery pack is electrically connected to the battery pack interface, a conduction band of multi-phase windings is reduced when the load parameter reaches a ninth threshold; and if a second battery pack is electrically connected to the battery pack interface, the conduction band is reduced when the load parameter reaches a tenth threshold, where the ninth threshold is different from the tenth threshold.

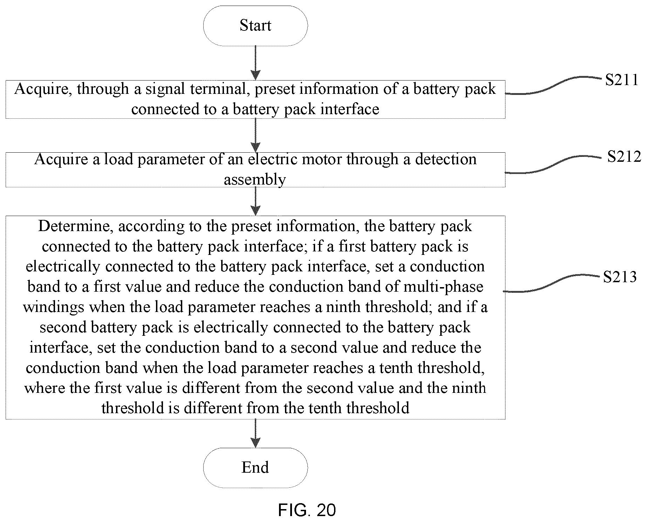

As shown in FIG. 20, a control flowchart of the power tool system in the preceding example specifically includes the steps below.

In S211, preset information of a battery pack connected to a battery pack interface is acquired through a signal terminal.

In S212, a load parameter of an electric motor is acquired through a detection assembly.

In S213, the battery pack connected to the battery pack interface is determined according to the preset information; if a first battery pack is electrically connected to the battery pack interface, a conduction band is set to a first value and the conduction band of multi-phase windings is reduced when the load parameter reaches a ninth threshold; and if a second battery pack is electrically connected to the battery pack interface, the conduction band is set to a second value and the conduction band is reduced when the load parameter reaches a tenth threshold, where the first value is different from the second value and the ninth threshold is different from the tenth threshold.

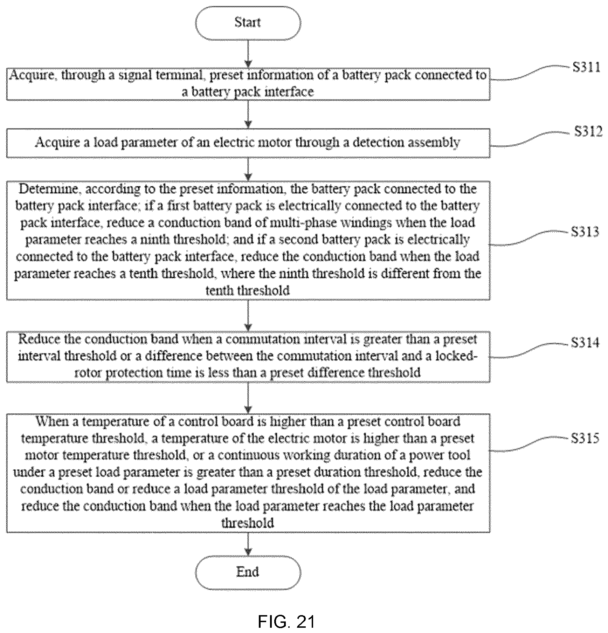

As shown in FIG. 21, a control flowchart of the power tool system in the preceding example specifically includes the steps below.

In S311, preset information of a battery pack connected to a battery pack interface is acquired through a signal terminal.

In S312, a load parameter of an electric motor is acquired through a detection assembly.

In S313, the battery pack connected to the battery pack interface is determined according to the preset information; if a first battery pack is electrically connected to the battery pack interface, a conduction band of multi-phase windings is reduced when the load parameter reaches a ninth threshold; and if a second battery pack is electrically connected to the battery pack interface, the conduction band is reduced when the load parameter reaches a tenth threshold, where the ninth threshold is different from the tenth threshold.

In S314, the conduction band is reduced when a commutation interval is greater than a preset interval threshold or a difference between the commutation interval and a locked-rotor protection time is less than a preset difference threshold.

In S315, when a temperature of a control board is higher than a preset control board temperature threshold, a temperature of the electric motor is higher than a preset motor temperature threshold, or a continuous working duration of a power tool under a preset load parameter is greater than a preset duration threshold, the conduction band is reduced or a load parameter threshold of the load parameter is reduced, and the conduction band is reduced when the load parameter reaches the load parameter threshold.

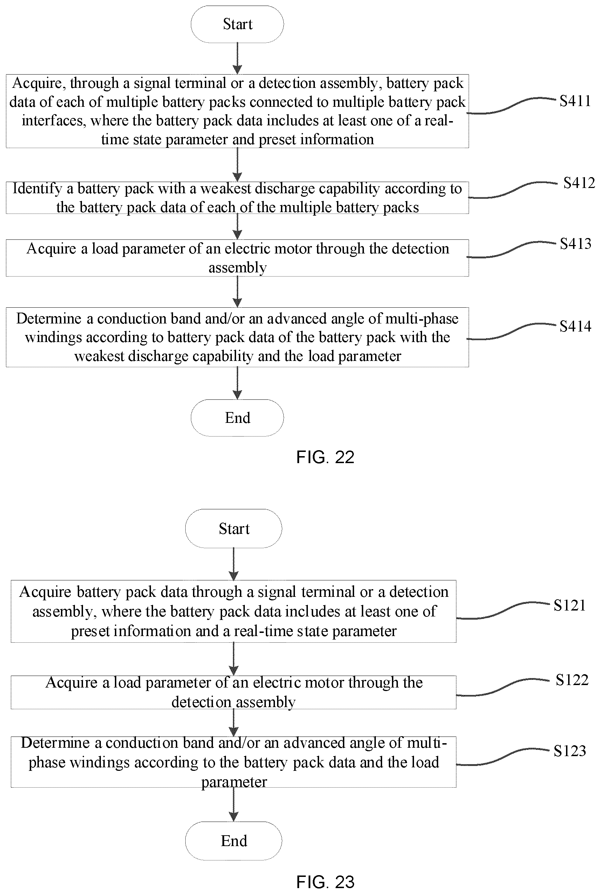

As shown in FIG. 22, a control flowchart of the power tool system in the preceding example specifically includes the steps below.

In S411, battery pack data of each of multiple battery packs connected to multiple battery pack interfaces is acquired through a signal terminal or a detection assembly, where the battery pack data includes at least one of a real-time state parameter and preset information.

In S412, a battery pack with a weakest discharge capability is identified according to the battery pack data of each of the multiple battery packs.

In S413, a load parameter of an electric motor is acquired through the detection assembly.

In S414, a conduction band and/or an advanced angle of multi-phase windings are determined according to battery pack data of the battery pack with the weakest discharge capability and the load parameter.

As shown in FIG. 23, a control flowchart of the circular saw in the preceding example specifically includes the steps below.

In S121, battery pack data is acquired through a signal terminal or a detection assembly, where the battery pack data includes at least one of preset information and a real-time state parameter.

In S122, a load parameter of an electric motor is acquired through the detection assembly.

In S123, a conduction band and/or an advanced angle of multi-phase windings are determined according to the battery pack data and the load parameter.

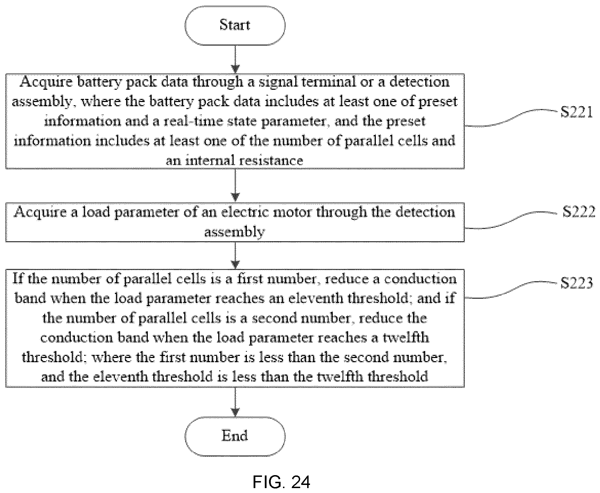

As shown in FIG. 24, a control flowchart of the circular saw in the preceding example specifically includes the steps below.

In S221, battery pack data is acquired through a signal terminal or a detection assembly, where the battery pack data includes at least one of preset information and a real-time state parameter, and the preset information includes at least one of the number of parallel cells and an internal resistance.

In S222, a load parameter of an electric motor is acquired through the detection assembly.

In S223, if the number of parallel cells is a first number, a conduction band is reduced when the load parameter reaches an eleventh threshold; and if the number of parallel cells is a second number, the conduction band is reduced when the load parameter reaches a twelfth threshold; where the first number is less than the second number, and the eleventh threshold is less than the twelfth threshold.

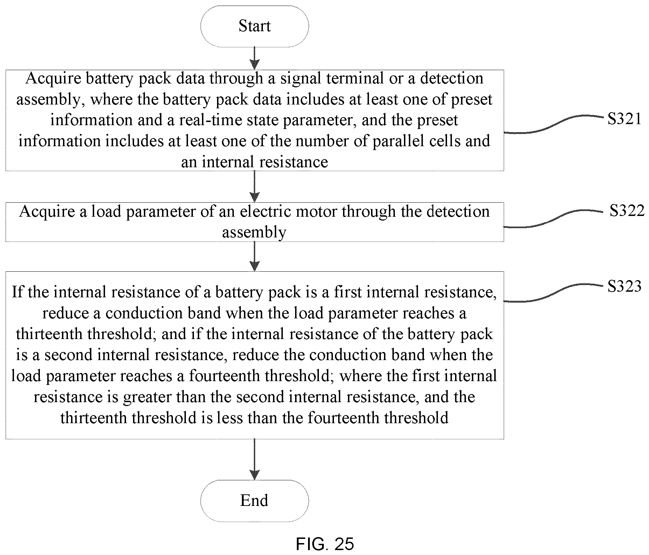

As shown in FIG. 25, a control flowchart of the circular saw in the preceding example specifically includes the steps below.

In S321, battery pack data is acquired through a signal terminal or a detection assembly, where the battery pack data includes at least one of preset information and a real-time state parameter, and the preset information includes at least one of the number of parallel cells and an internal resistance.

In S322, a load parameter of an electric motor is acquired through the detection assembly.

In S323, if the internal resistance of a battery pack is a first internal resistance, a conduction band is reduced when the load parameter reaches a thirteenth threshold; and if the internal resistance of the battery pack is a second internal resistance, the conduction band is reduced when the load parameter reaches a fourteenth threshold; where the first internal resistance is greater than the second internal resistance, and the thirteenth threshold is less than the fourteenth threshold.

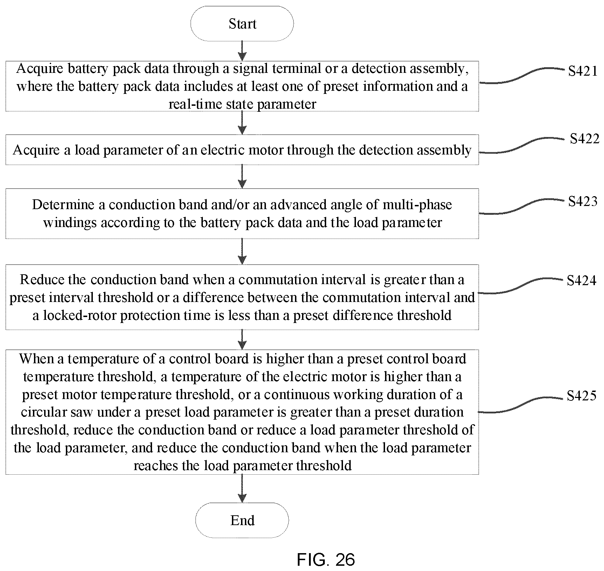

As shown in FIG. 26, a control flowchart of the circular saw in the preceding example specifically includes the steps below.

In S421, battery pack data is acquired through a signal terminal or a detection assembly, where the battery pack data includes at least one of preset information and a real-time state parameter.

In S422, a load parameter of an electric motor is acquired through the detection assembly.

In S423, a conduction band and/or an advanced angle of multi-phase windings are determined according to the battery pack data and the load parameter.

In S424, the conduction band is reduced when a commutation interval is greater than a preset interval threshold or a difference between the commutation interval and a locked-rotor protection time is less than a preset difference threshold.

In S425, when a temperature of a control board is higher than a preset control board temperature threshold, a temperature of the electric motor is higher than a preset motor temperature threshold, or a continuous working duration of the circular saw under a preset load parameter is greater than a preset duration threshold, the conduction band is reduced or a load parameter threshold of the load parameter is reduced, and the conduction band is reduced when the load parameter reaches the load parameter threshold.

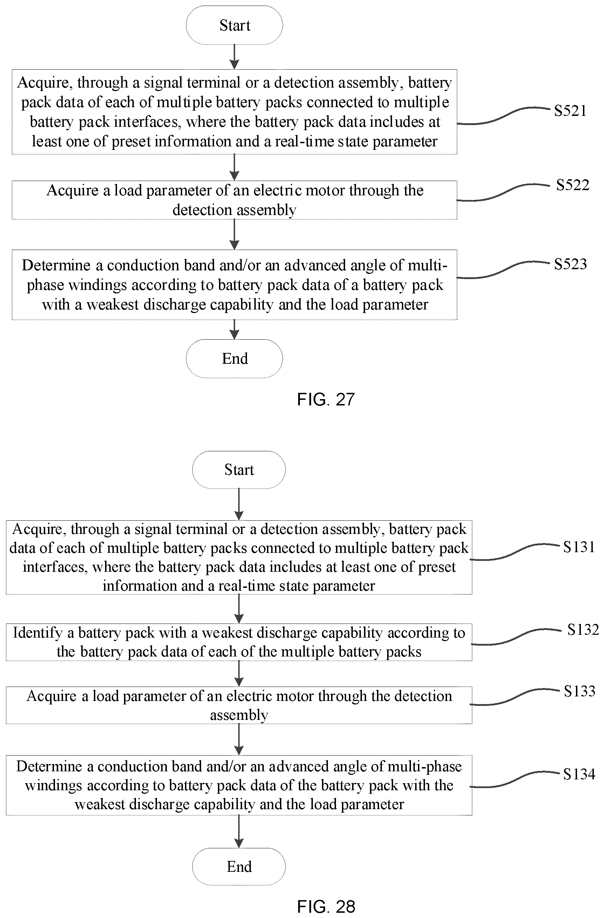

As shown in FIG. 27, a control flowchart of the circular saw in the preceding example specifically includes the steps below.

In S521, battery pack data of each of multiple battery packs connected to multiple battery pack interfaces is acquired through a signal terminal or a detection assembly, where the battery pack data includes at least one of preset information and a real-time state parameter.

In S522, a load parameter of an electric motor is acquired through the detection assembly.

In S523, a conduction band and/or an advanced angle of multi-phase windings are determined according to battery pack data of a battery pack with a weakest discharge capability and the load parameter.

As shown in FIG. 28, a control flowchart of the power tool in the preceding example specifically includes the steps below.

In S131, battery pack data of each of multiple battery packs connected to multiple battery pack interfaces is acquired through a signal terminal or a detection assembly, where the battery pack data includes at least one of preset information and a real-time state parameter.

In S132, a battery pack with a weakest discharge capability is identified according to the battery pack data of each of the multiple battery packs.

In S133, a load parameter of an electric motor is acquired through the detection assembly.

In S134, a conduction band and/or an advanced angle of multi-phase windings are determined according to battery pack data of the battery pack with the weakest discharge capability and the load parameter.

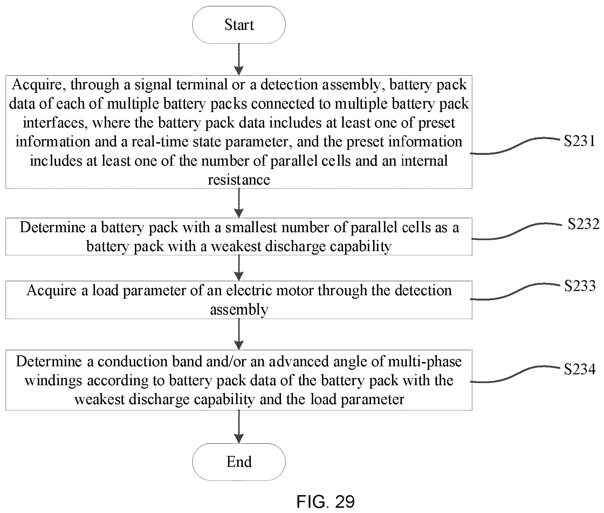

As shown in FIG. 29, a control flowchart of the power tool in the preceding example specifically includes the steps below.

In S231, battery pack data of each of multiple battery packs connected to multiple battery pack interfaces is acquired through a signal terminal or a detection assembly, where the battery pack data includes at least one of preset information and a real-time state parameter, and the preset information includes at least one of the number of parallel cells and an internal resistance.

In S232, a battery pack with a smallest number of parallel cells is determined as a battery pack with a weakest discharge capability.

In S233, a load parameter of an electric motor is acquired through the detection assembly.

In S234, a conduction band and/or an advanced angle of multi-phase windings are determined according to battery pack data of the battery pack with the weakest discharge capability and the load parameter.

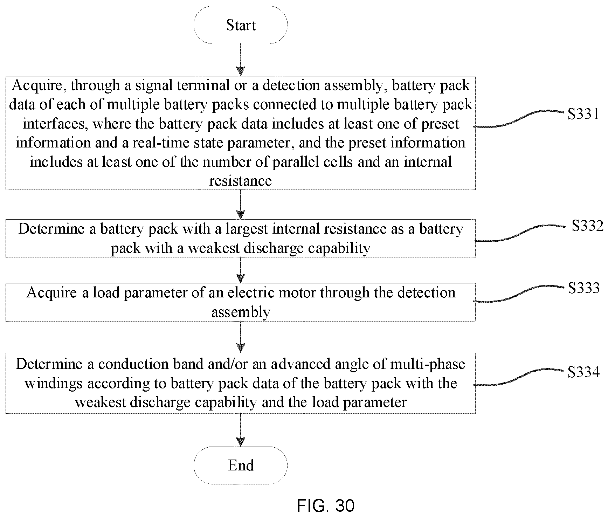

As shown in FIG. 30, a control flowchart of the power tool in the preceding example specifically includes the steps below.

In S331, battery pack data of each of multiple battery packs connected to multiple battery pack interfaces is acquired through a signal terminal or a detection assembly, where the battery pack data includes at least one of preset information and a real-time state parameter, and the preset information includes at least one of the number of parallel cells and an internal resistance.

In S332, a battery pack with a largest internal resistance is determined as a battery pack with a weakest discharge capability.

In S333, a load parameter of an electric motor is acquired through the detection assembly.

In S334, a conduction band and/or an advanced angle of multi-phase windings are determined according to battery pack data of the battery pack with the weakest discharge capability and the load parameter.

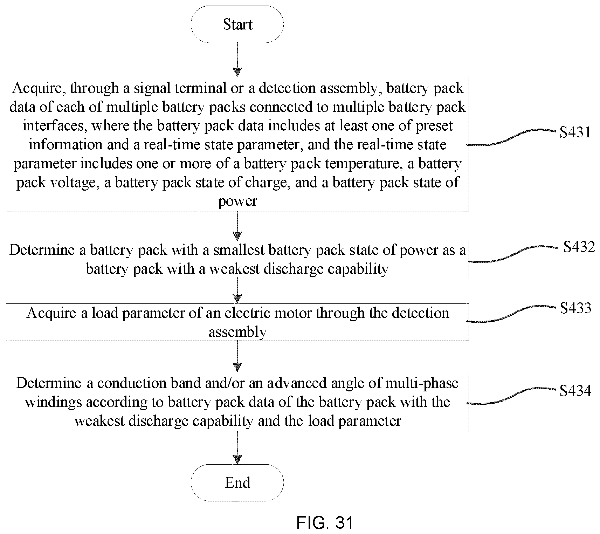

As shown in FIG. 31, a control flowchart of the power tool in the preceding example specifically includes the steps below.

In S431, battery pack data of each of multiple battery packs connected to multiple battery pack interfaces is acquired through a signal terminal or a detection assembly, where the battery pack data includes at least one of preset information and a real-time state parameter, and the real-time state parameter includes one or more of a battery pack temperature, a battery pack voltage, a battery pack state of charge, and a battery pack state of power.

In S432, a battery pack with a smallest battery pack state of power is determined as a battery pack with a weakest discharge capability.

In S433, a load parameter of an electric motor is acquired through the detection assembly.

In S434, a conduction band and/or an advanced angle of multi-phase windings are determined according to battery pack data of the battery pack with the weakest discharge capability and the load parameter.

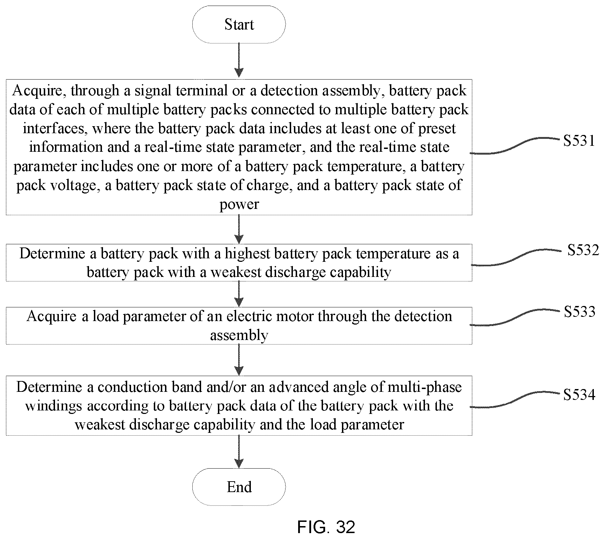

As shown in FIG. 32, a control flowchart of the power tool in the preceding example specifically includes the steps below.

In S531, battery pack data of each of multiple battery packs connected to multiple battery pack interfaces is acquired through a signal terminal or a detection assembly, where the battery pack data includes at least one of preset information and a real-time state parameter, and the real-time state parameter includes one or more of a battery pack temperature, a battery pack voltage, a battery pack state of charge, and a battery pack state of power.

In S532, a battery pack with a highest battery pack temperature is determined as a battery pack with a weakest discharge capability.

In S533, a load parameter of an electric motor is acquired through the detection assembly.

In S534, a conduction band and/or an advanced angle of multi-phase windings are determined according to battery pack data of the battery pack with the weakest discharge capability and the load parameter.

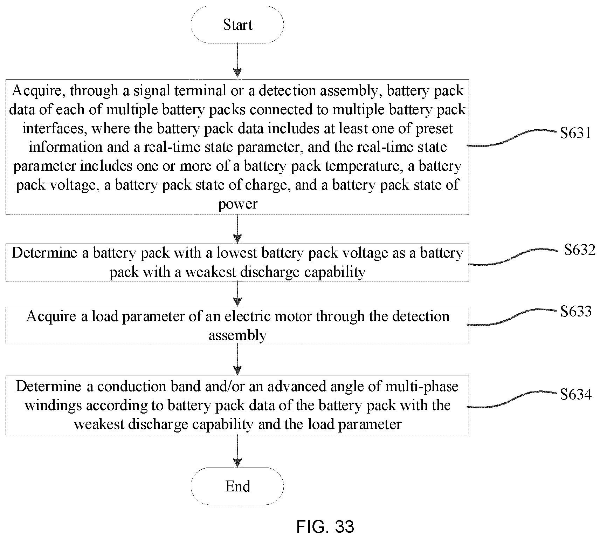

As shown in FIG. 33, a control flowchart of the power tool in the preceding example specifically includes the steps below.

In S631, battery pack data of each of multiple battery packs connected to multiple battery pack interfaces is acquired through a signal terminal or a detection assembly, where the battery pack data includes at least one of preset information and a real-time state parameter, and the real-time state parameter includes one or more of a battery pack temperature, a battery pack voltage, a battery pack state of charge, and a battery pack state of power.

In S632, a battery pack with a lowest battery pack voltage is determined as a battery pack with a weakest discharge capability.

In S633, a load parameter of an electric motor is acquired through the detection assembly.

In S634, a conduction band and/or an advanced angle of multi-phase windings are determined according to battery pack data of the battery pack with the weakest discharge capability and the load parameter.

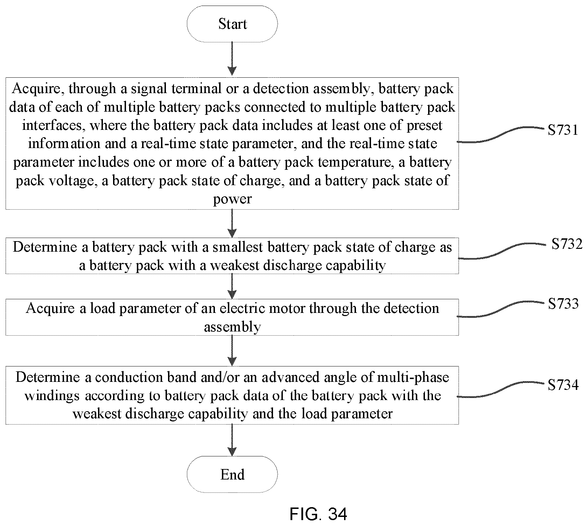

As shown in FIG. 34, a control flowchart of the power tool in the preceding example specifically includes the steps below.

In S731, battery pack data of each of multiple battery packs connected to multiple battery pack interfaces is acquired through a signal terminal or a detection assembly, where the battery pack data includes at least one of preset information and a real-time state parameter, and the real-time state parameter includes one or more of a battery pack temperature, a battery pack voltage, a battery pack state of charge, and a battery pack state of power.

In S732, a battery pack with a smallest battery pack state of charge is determined as a battery pack with a weakest discharge capability.

In S733, a load parameter of an electric motor is acquired through the detection assembly.

In S734, a conduction band and/or an advanced angle of multi-phase windings are determined according to battery pack data of the battery pack with the weakest discharge capability and the load parameter.

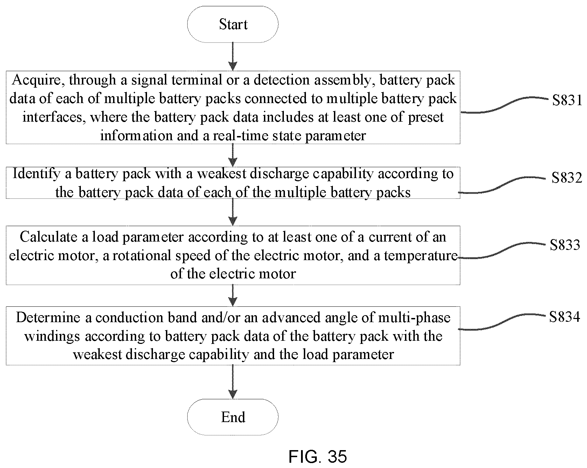

As shown in FIG. 35, a control flowchart of the power tool in the preceding example specifically includes the steps below.

In S831, battery pack data of each of multiple battery packs connected to multiple battery pack interfaces is acquired through a signal terminal or a detection assembly, where the battery pack data includes at least one of preset information and a real-time state parameter.

In S832, a battery pack with a weakest discharge capability is identified according to the battery pack data of each of the multiple battery packs.

In S833, a load parameter is calculated according to at least one of a current of an electric motor, a rotational speed of the electric motor, and a temperature of the electric motor.

In S834, a conduction band and/or an advanced angle of multi-phase windings are determined according to battery pack data of the battery pack with the weakest discharge capability and the load parameter.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
an electric motor comprising multi-phase windings;
a driver circuit electrically connected to the electric motor and configured to switch an energized state of the multi-phase windings;
a controller electrically connected to the driver circuit and configured to output control signals to the driver circuit;
a detection assembly communicatively connected to the controller and configured to detect a working state of the power tool; and
a battery pack interface configured to be electrically connected to a battery pack and
comprising a terminal assembly, wherein the terminal assembly comprises electrode terminals electrically connected to the driver circuit and a signal terminal communicatively connected to the controller;
wherein the controller is configured to:
acquire a real-time state parameter of the battery pack through the signal terminal or the detection assembly;
acquire a load parameter of the electric motor through the detection assembly; and
determine a conduction band and/or an advanced angle of the multi-phase windings according to the real-time state parameter and the load parameter.

2. The power tool according to claim 1, wherein the real-time state parameter comprises at least one of a battery pack temperature, a battery pack voltage, a battery pack state of charge, and a battery pack state of power.

3. The power tool according to claim 2, wherein the controller is configured to:
if the battery pack state of power is a first state of power, reduce the conduction band when the load parameter reaches a first threshold; and
if the battery pack state of power is a second state of power, reduce the conduction band when the load parameter reaches a second threshold;
wherein the first state of power is greater than the second state of power, and the first threshold is greater than the second threshold.

4. The power tool according to claim 2, wherein the controller is configured to:
if the battery pack temperature is a first temperature, reduce the conduction band when the load parameter reaches a third threshold; and
if the battery pack temperature is a second temperature, reduce the conduction band when the load parameter reaches a fourth threshold;
wherein the first temperature is higher than the second temperature, and the third threshold is less than the fourth threshold.

5. The power tool according to claim 2, wherein the controller is configured to:
if the battery pack voltage is a first voltage, reduce the conduction band when the load parameter reaches a fifth threshold; and
if the battery pack voltage is a second voltage, reduce the conduction band when the load parameter reaches a sixth threshold;
wherein the first voltage is higher than the second voltage, and the fifth threshold is greater than the sixth threshold.

6. The power tool according to claim 2, wherein the controller is configured to:
if the battery pack state of charge is a first state of charge, reduce the conduction band when the load parameter reaches a seventh threshold; and
if the battery pack state of charge is a second state of charge, reduce the conduction band when the load parameter reaches an eighth threshold;
wherein the first state of charge is greater than the second state of charge, and the seventh threshold is greater than the eighth threshold.

7. The power tool according to claim 1, wherein the real-time state parameter is directly sent by the battery pack to the controller through the signal terminal; or the controller calculates the real-time state parameter according to a signal received through the signal terminal.

8. The power tool according to claim 2, wherein the detection assembly comprises at least one of a voltage detection member, a current detection member, and a temperature detection member, the voltage detection member is configured to detect the battery pack voltage, the current detection member is configured to detect a current of the electric motor, and the temperature detection member is configured to detect a temperature of the electric motor.

9. The power tool according to claim 1, wherein the controller is further configured to:
reduce the conduction band when a commutation interval is greater than a preset interval threshold or a difference between the commutation interval and a locked-rotor protection time is less than a preset difference threshold.

10. The power tool according to claim 1, further comprising a control board, wherein the driver circuit is disposed on the control board; and
the controller is further configured to:
when a temperature of the control board is higher than a preset control board temperature threshold, a temperature of the electric motor is higher than a preset motor temperature threshold, or a continuous working duration of the power tool under a preset load parameter is greater than a preset duration threshold, reduce the conduction band or reduce a load parameter threshold of the load parameter, and
reduce the conduction band when the load parameter reaches the load parameter threshold.

11. The power tool according to claim 1, wherein the power tool is a circular saw.

12. The power tool according to claim 1, wherein the power tool has a plurality of battery pack interfaces, and when the plurality of battery pack interfaces are connected with a plurality of battery packs, the controller is further configured to:
acquire battery pack data of each of a plurality of battery packs connected to the plurality of battery pack interfaces, wherein the battery pack data comprises at least one of a preset information and the real-time state parameter;
identify a battery pack with a weakest discharge capability according to the battery pack data of each of the plurality of battery packs; and
determine a conduction band and/or an advanced angle of the multi-phase windings according to battery pack data of the battery pack with the weakest discharge capability and the load parameter.

13. The power tool according to claim 12, wherein the preset information comprises at least one of a number of parallel cells and an internal resistance; and the controller is configured to determine a battery pack with a smallest number of parallel cells as the battery pack with the weakest discharge capability or determine a battery pack with a largest internal resistance as the battery pack with the weakest discharge capability.

14. The power tool according to claim 12, wherein the real-time state parameter comprises one or more of a battery pack temperature, a battery pack voltage, a battery pack state of charge, and a battery pack state of power; and the controller is configured to determine a battery pack with a smallest battery pack state of power as the battery pack with the weakest discharge capability, determine a battery pack with a highest battery pack temperature as the battery pack with the weakest discharge capability, determine a battery pack with a lowest battery pack voltage as the battery pack with the weakest discharge capability, or determine a battery pack with a smallest battery pack state of charge as the battery pack with the weakest discharge capability.

15. The power tool according to claim 12, wherein the controller is configured to calculate the load parameter according to at least one of a current of the electric motor, a rotational speed of the electric motor, and a temperature of the electric motor.

## Amended claims

### Amended claims in accordance with Rule 137(2) EPC.

1. A power tool (20), comprising:
an electric motor (12) comprising multi-phase windings (11);
a driver circuit (171) electrically connected to the electric motor and configured to switch an energized state of the multi-phase windings;
a controller (17) electrically connected to the driver circuit and configured to output control signals to the driver circuit;
a detection assembly (50) communicatively connected to the controller and configured to detect a working state of the power tool; and
a battery pack interface (60) configured to be electrically connected to and be adapted to at least a first battery pack (30) and a second battery pack and comprising a terminal assembly, wherein the terminal assembly comprises electrode terminals (61) electrically connected to the driver circuit and a signal terminal (62) communicatively connected to the controller, wherein the first battery pack and the second battery pack differ in at least one of the number of parallel cells or an internal resistance;
wherein the controller is configured to:
acquire a real-time state parameter of the battery pack through the signal terminal or the detection assembly;
acquire a load parameter of the electric motor through the detection assembly; and
determine a conduction band and/or an advanced angle of the multi-phase windings according to the real-time state parameter and the load parameter;
**characterized in that**
the controller is configured to:
determine, according to the at least one of the number of parallel cells or the internal resistance, whether the first battery pack or the second battery pack is connected to the battery pack interface;
when the first battery pack is electrically connected to the battery pack interface, reduce the conduction band of the multi-phase windings when the load parameter reaches a first threshold; and
when the second battery pack is electrically connected to the battery pack interface, reduce the conduction band when the load parameter reaches a second threshold,
where the first threshold is different from the second threshold.

2. The power tool according to claim 1, wherein the real-time state parameter comprises at least one of a battery pack temperature, a battery pack voltage, a battery pack state of charge, and a battery pack state of power.

3. The power tool according to claim 2, wherein the controller is configured to:
if the battery pack state of power is a first state of power, reduce the conduction band when the load parameter reaches a third threshold; and
if the battery pack state of power is a second state of power, reduce the conduction band when the load parameter reaches a fourth threshold;
wherein the first state of power is greater than the second state of power, and the third threshold is greater than the fourth threshold.

4. The power tool according to claim 2, wherein the controller is configured to:
if the battery pack temperature is a first temperature, reduce the conduction band when the load parameter reaches a fifth threshold; and
if the battery pack temperature is a second temperature, reduce the conduction band when the load parameter reaches a sixth threshold;
wherein the first temperature is higher than the second temperature, and the fifth threshold is less than the sixth threshold.

5. The power tool according to claim 2, wherein the controller is configured to:
if the battery pack voltage is a first voltage, reduce the conduction band when the load parameter reaches a seventh threshold; and
if the battery pack voltage is a second voltage, reduce the conduction band when the load parameter reaches a eighth threshold;
wherein the first voltage is higher than the second voltage, and the seventh threshold is greater than the eighth threshold.

6. The power tool according to claim 2, wherein the controller is configured to:
if the battery pack state of charge is a first state of charge, reduce the conduction band when the load parameter reaches a ninth threshold; and
if the battery pack state of charge is a second state of charge, reduce the conduction band when the load parameter reaches an tenth threshold;
wherein the first state of charge is greater than the second state of charge, and the ninth threshold is greater than the tenth threshold.

7. The power tool according to claim 1, wherein the real-time state parameter is directly sent by the battery pack to the controller through the signal terminal; or the controller calculates the real-time state parameter according to a signal received through the signal terminal.

8. The power tool according to claim 2, wherein the detection assembly comprises at least one of a voltage detection member, a current detection member, and a temperature detection member, the voltage detection member is configured to detect the battery pack voltage, the current detection member is configured to detect a current of the electric motor, and the temperature detection member is configured to detect a temperature of the electric motor.

9. The power tool according to claim 1, wherein the controller is further configured to:
reduce the conduction band when a commutation interval is greater than a preset interval threshold or a difference between the commutation interval and a locked-rotor protection time is less than a preset difference threshold.

10. The power tool according to claim 1, further comprising a control board, wherein the driver circuit is disposed on the control board; and
the controller is further configured to:
when a temperature of the control board is higher than a preset control board temperature threshold, a temperature of the electric motor is higher than a preset motor temperature threshold, or a continuous working duration of the power tool under a preset load parameter is greater than a preset duration threshold,
reduce the conduction band or reduce a load parameter threshold of the load parameter, and reduce the conduction band when the load parameter reaches the load parameter threshold.

11. The power tool according to claim 1, wherein the power tool is a circular saw.

12. The power tool according to claim 1, wherein the power tool has a plurality of battery pack interfaces, and when the plurality of battery pack interfaces are connected with a plurality of battery packs, the controller is further configured to:
acquire battery pack data of each of a plurality of battery packs connected to the plurality of battery pack interfaces, wherein the battery pack data comprises at least one of a preset information and the real-time state parameter;
identify a battery pack with a weakest discharge capability according to the battery pack data of each of the plurality of battery packs; and
determine a conduction band and/or an advanced angle of the multi-phase windings according to battery pack data of the battery pack with the weakest discharge capability and the load parameter.

13. The power tool according to claim 12, wherein
the preset information comprises at least one of a number of parallel cells and an internal resistance; and
the controller is configured to determine a battery pack with a smallest number of parallel cells as the battery pack with the weakest discharge capability or determine a battery pack with a largest internal resistance as the battery pack with the weakest discharge capability.

14. The power tool according to claim 12, wherein
the real-time state parameter comprises one or more of a battery pack temperature, a battery pack voltage, a battery pack state of charge, and a battery pack state of power;
and the controller is configured to
determine a battery pack with a smallest battery pack state of power as the battery pack with the weakest discharge capability,
determine a battery pack with a highest battery pack temperature as the battery pack with the weakest discharge capability,
determine a battery pack with a lowest battery pack voltage as the battery pack with the weakest discharge capability, or
determine a battery pack with a smallest battery pack state of charge as the battery pack with the weakest discharge capability.

15. The power tool according to claim 12, wherein the controller is configured to calculate the load parameter according to at least one of a current of the electric motor, a rotational speed of the electric motor, and a temperature of the electric motor.
